(19) Europäisches Patentamt
European Patent Office
Office européen des brevets

(11) **EP 3 932 875 B1**

(12) **EUROPÄISCHE PATENTSCHRIFT**

(45) Veröffentlichungstag und Bekanntmachung des Hinweises auf die Patenterteilung:
**28.01.2026 Patentblatt 2026/05**

(51) Internationale Patentklassifikation (IPC):
**C03B 5/235** *(2006.01)* **C03B 7/098** *(2006.01)*
**C03B 5/167** *(2006.01)*

(21) Anmeldenummer: **21182559.1**

(22) Anmeldetag: **29.06.2021**

(52) Gemeinsame Patentklassifikation (CPC):
**C03B 5/235; C03B 5/1675; C03B 7/098**

(54) **VERFAHREN ZUR HERSTELLUNG EINES GLASPRODUKTS**

METHOD OF MAKING A GLASS PRODUCT

PROCÉDÉ DE FABRICATION D'UN PRODUIT EN VERRE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **02.07.2020 DE 102020117532**

(43) Veröffentlichungstag der Anmeldung:
**05.01.2022 Patentblatt 2022/01**

(73) Patentinhaber: **SCHOTT AG**
**55122 Mainz (DE)**

(72) Erfinder:
• **HOFMANN, Kim Oliver**
**55252 Mainz-Kastel (DE)**

• **PFEIFFER, Thomas**
**55218 Ingelheim (DE)**
• **CLAUSSEN, Olaf**
**55278 Undenheim (DE)**
• **WERNER, Ralf-Dieter**
**55487 Laufersweiler (DE)**
• **PERLITZ, Dennis**
**37647 Vahlbruch (DE)**

(74) Vertreter: **Blumbach · Zinngrebe Patentanwälte PartG mbB**
**Alexandrastraße 5**
**65187 Wiesbaden (DE)**

(56) Entgegenhaltungen:
CN-A- 102 001 825    JP-A- 2017 030 987
JP-A- 2018 002 539    JP-A- H0 920 521

**Beschreibung**

Gebiet der Erfindung

Die vorliegende Erfindung betrifft allgemein ein Glasprodukt sowie ein Verfahren zu dessen Herstellung.

Hintergrund der Erfindung

Bei der Herstellung von Glas, insbesondere bei der Herstellung eines Produkts aus oder umfassend Glas wird die Glasschmelze vom Schmelzwannenbereich zum Formgebungsbereich durch ein Leitungssystem transportiert. Dieses Leitungssystem muss durch entsprechende Konstruktion wärmeabgebender Teile auf Temperatur gehalten werden, um die für die jeweilige Glasschmelze und den Formgebungsprozess passende Temperatur an der jeweils entsprechenden Stelle zur Verfügung zu stellen. Folglich muss das Leitungssystem in der Regel beheizt werden, insbesondere auch, um für Transportvorgänge des geschmolzenen Glases die jeweils benötigte Viskosität mit der nötigen Produktionssicherheit bereitzustellen.

Bekannt sind beispielsweise indirekte Beheizungen durch Bandheizungen oder auch anders ausgeführte Wärmestrahler, die indirekt durch einen Wärmeleitprozess das glasführende Leitungssystem auf Temperatur halten.

Weiterhin bekannt sind auch direkte Beheizungen durch Erwärmung der Wände des glasführenden Leitungssystems durch Widerstandsbeheizung, bei welchen in der Regel Joulesche Wärme an das Glas abgegeben wird.

Das australische Patent AU 473 784 B offenbart ein Verfahren zur Herstellung von Flachglas, bei welchem für heißzuformendes Glas, vor dessen Formgebung in ein Glasband, mittels elektrischer Beheizung eine Viskositätseinstellung vorgenommen wird. Hierbei wird ein elektrischer Strom durch das Glas geleitet, um die Temperatur des Glases und dessen Strömung zu steuern. Nachteilig ist bei derartigen Verfahren, dass es zur Blasenbildung und elektrochemischen Reaktionen kommen kann.

DE 10 2016 107 577 A1 beschreibt eine Vorrichtung und ein Verfahren zur Herstellung von Glasprodukten aus einer Glasschmelze, bei welcher die Vorrichtung einen Tiegel, wie z.B. einen Rührtiegel, und ein darin befindliches Bauteil, wie beispielsweise ein drehbeweglich montiertes Rührorgan, zur Verarbeitung der Glasschmelze aufweist, und wobei die Vorrichtung zum Heizen der Glasschmelze ein Wechselstromaggregat aufweist, das den Tiegel bzw. Rührtiegel über Stromanschlusselemente bestromt.

DE 10 2005 015 651 A1 offenbart generell ein Verfahren und eine Schaltungsanordnung zur Impedanzbestimmung an einer elektrisch beheizten Glasschmelzwanne sowie die Verwendung des Verfahrens und der Vorrichtung zur Herstellung von Glas. Auch diese Veröffentlichung beschreibt, dass der verwendete Heizstrom durch das Glas selbst geleitet wird. Die Impendanzmessung wird eingesetzt, um den Verbrauch von Heizelektroden oder der Palisadensteine der Schmelzwanne zu erkennen sowie um zu bestimmen, ob ein mit Platin überzogener Rührer eine exzentrische Rührbewegung vornimmt. Ferner sollen ungewollte Erdschlüsse in oder an der Glasschmelzwanne aufgespürt werden; zwischen allen Elektroden der Glasschmelzwanne fließende Ströme berechnet werden und Gleichstrompfade, die eine ungewünschte Blasenbildung und Korrosion verursachen können, berechnet bzw. ermittelt werden.

Die internationale Patentanmeldung WO 2020/023218 A1 beschreibt ein Verfahren zur direkten Beheizung eines metallischen Gefäßes in einem Glasherstellungsprozess. Dabei können mehrere elektrische Heizkreise zur Beheizung gewählt werden, welche beispielsweise voneinander unterschiedliche Phasenwinkel aufweisen.

JP 2018002539 A offenbart ein Verfahren und eine Vorrichtung zur Herstellung eines Glassubstrats. Beim Transferieren von geschmolzenem Glases mittels eines Transferrohres wird dieses durch Erwärmen des Transferrohrs erwärmt und hierbei ein Wechselstrom verwendet, dessen Frequenz höher als 60 Hz ist.

JP H0920521 A diskutiert zur Verhinderung der Blasenbildung in einer Glasschmelze und von Rissen in einem Leitungsrohr eine Vereinheitlichung der Stromdichte im gesamten Bereich eines eines Vier-Wege-Leitungsrohrs und ein gleichmäßiges Erwärmen des gesamten Bereichs des Vier-Wege-Leitungsrohrs. Hierzu werden einphasige Wechselströme mit einer Phasendifferenz von jeweils 60° an verschiedenen Stellen des Vierwege-Leitungsrohres eingespeist und wird die Stromdichte im gesamten Bereich des Vier-Wege-Leitungsrohrs vereinheitlicht.

JP 2017030987 A beschreibt eine Vorrichtung zur Erwärmung geschmolzenen Glases, eine Vorrichtung zur Glasherstellung sowie ein Verfahren zur Herstellung eines Glasartikels. In der Vorrichtung zur Erwärmung des Glases werden Temperaturunterschiede des geschmolzenen Glases vermieden, um Heterogenitäten des geschmolzenen Glases zu unterdrücken.

In CN102001825 A wird ein alkalifreies Glas für Flachbildschirme und ein Verfahren zu dessen Herstellung offenbart. Das Glas umfasst die folgenden Komponenten in Massenprozent: 54 - 68 Prozent $SiO_2$, 10,8 - 17,1 Prozent $Al_2O_3$, 7,6 - 12,5 Prozent $B_2O_3$, 0,2 - 1,8 Prozent MgO, 4,2 - 15 Prozent CaO, 0,6 - 7,1 Prozent SrO, 0,1 - 5 Prozent BaO, 0,2 - 1 Prozent ZnO, 0,1 - 1,54 Prozent ZrO2 und 0,1-1,3 Prozent SnO+SnO2. Das Aluminiumoxid-Borosilikatglas enthält kein Arsen und Antimon, die zu einer Umweltbelastung führen können,

In üblicher Weise wird bei einer Beheizung stromführender Leitungselemente zur Regelung der entstehenden Wärme die anliegende Spannung und der durch das Leitungssystem fließende Strom beeinflusst sowie gegebenenfalls die Modulation des Wechselstroms. Die Modulation kann mittels Transformation erfolgen oder durch Pulsmodulation mit Pulsgruppen, welches insbesondere auch mittels Phasenanschnittsteuerungen durchführbar ist. Schaltungstechnisch wird dies in der Regel durch Transformatoren, Transduktoren oder auch Thyristoren realisiert.

Der Nachteil bei direkter Beheizung ist im Allgemeinen, dass es durch die Existenz von elektrischer Leistung, Edelmetall und Glas zu elektrochemischen Reaktionen, insbesondere auch an der Grenzfläche kommt, die zu Glasfehlern im Produkt wie Blasen und/oder metallischen Partikeln und/oder einer Reduktion der optischen Transparenz führen.

Der Nachteil bei indirekten Beheizungen ist, dass der Wärmeleitprozess eine Zeitverzögerung der Temperaturregelung für die Temperatur des im Leitungssystem befindlichen Glases erzeugt.

Auf dem Weg von der Schmelzwanne zum Formgebungsbereich kann es beim Transport von geschmolzenem Glas bei der direkten Beheizung zum Auftreten von Defekten kommen, welche beispielsweise aus Wechselwirkungen der Glasschmelze mit den Refraktärmaterialien resultieren können. Typischerweise wird die Glasschmelze vom Schmelzwannenbereich zum Formgebungsbereich durch ein Leitungssystem aus oder umfassend Edelmetalle, wie beispielsweise Platin oder Legierungen umfassend Platin, geleitet. Beispielsweise kann Platin mit Rhodium, Iridium und/oder Gold legiert sein und/oder zusätzlich Zirkoniumdioxid und/oder Yttriumoxid zur Feinkornstabilisierung umfassen. Vorteilhaft an der Verwendung von Edelmetall umfassenden Bauteilen als Leitungsmaterialien ist es dabei, dass diese Bauteile elektrisch leitfähig sind. Denn auf diese Weise können diese Bauteile elektrisch beheizt werden, indem vorzugsweise ein Wechselstrom durch das Bauteil fließt und Joulesche Wärme entsteht, die das Bauteil aufheizt.

Allerdings hat sich gezeigt, dass es gerade am Kontakt zwischen dem oder den Edelmetall umfassenden Bauteilen des Leitungssystems beim Transport des geschmolzenen Glases zu Wechselwirkungen zwischen dem oder den Bauteilen und der Glasschmelze kommen kann. Diese Wechselwirkungen äußern sich im Entstehen von Defekten wie beispielsweise Blasen oder dem Eintrag von Partikeln, wie beispielsweise Edelmetall-Partikeln. Dies ist nachteilig, denn Blasen und/oder Partikel können für das jeweilige adressierte Produkt in der Regel störend sein und können zu erhöhtem Ausschuss führen.

Dies ist ganz besonders kritisch bei Spezialgläsern mit spezifischen, oft sehr hohen Anforderungen an die Produktqualität. Gerade für die Herstellung sehr dünner Glasprodukte, also für sogenanntes Dünnglas oder Dünnglasscheiben, ist nur eine sehr geringe Zahl von Defekten zulässig. Dabei ist nicht nur die absolute Zahl von Defekten beachtlich, sondern auch deren Art und Größe je nach den spezifischen Anforderungen an das Produkt. Beispielsweise können sehr kleine Partikel gerade noch zulässig sein, wohingegen größere Partikel unabhängig von ihrer Anzahl stets zu Ausschuss führen können.

Es besteht also ein Bedarf an Glasprodukten, insbesondere an Dünnglas oder Dünnglasscheiben, welche nur wenig Defekte, wie Blasen und/oder Partikel, umfassen. Weiterhin besteht ein Bedarf an einem Verfahren zur Herstellung solcher Produkte.

### Aufgabe der Erfindung

Die Aufgabe der Erfindung besteht in der Bereitstellung eines Verfahrens zum Herstellen eines Glasprodukts, welches die Schwächen bekannter Verfahren zumindest mildert.

### Zusammenfassung der Erfindung

Die Aufgabe wird gelöst durch den Gegenstand des Anspruchs 1. Bevorzugte und/oder spezielle Ausführungen finden sich in den abhängigen Ansprüchen. Die Beschreibung und die Zeichnungen enthalten Informationen zum Hintergrund und erläutern die in den Ansprüchen definierte Erfindung.

Beschrieben wird hiermit gemäß einem ersten Aspekt außerhalb der Erfindung ein Glasprodukt, insbesondere ein scheibenförmiges Glasprodukt, vorzugsweise mit einer Dicke von höchstens 1100 $\mu$m und mindestens 15 $\mu$m, umfassend ein silikatisches Glas, wobei das Glasprodukt weniger als 4 Partikel pro Kilogramm Glas eines Edelmetall umfassend Materials aufweist, vorzugsweise weniger als drei Partikel pro Kilogramm Glas eines Edelmetall umfassenden Materials, vorzugsweise bei einer Größe der Partikel von weniger als 200 $\mu$m, wobei als Größe Gp des Partikels der jeweils in einer Raumrichtung größte Abstand von Bestandteilen des Partikels (Atome oder Moleküle) verstanden wird. Gemittelte Durchmesser von Partikeln können somit kleiner als deren vorstehend definierte Größe sein.

Als silikatisches Glas wird im Sinne der vorliegenden Offenbarung ein nichtmetallisches Glas mit hohem $SiO_2$-Anteil verstanden, welches beispielsweise einen $SiO_2$-Gehalt von mindestens 50 Gew.-%, bevorzugt mindestens 55 Gew.-% und vorzugsweise höchstens 87 Gew.-% umfasst.

Als silikatische Glasschmelze wird eine Glasschmelze verstanden, welche ein silikatisches Glas enthält, wie dieses im vorstehenden Absatz definiert ist.

Gläser zur Herstellung der vorliegend offenbarten Glasprodukte umfassen beispielsweise die Gruppen der Borosilikat (BS)-, Alumosilikat (AS)- oder Boro-Alumosilikat-Gläser oder Lithium-Aluminium-Silikat-Glaskeramiken (LAS), welche ohne den Anspruch der Allgemeinheit zu verlieren hier beispielhaft genannt werden.

Das Glasprodukt nach einer Ausführungsform umfasst ein Glas umfassend wenigstens 50 Gew.- % $SiO_2$ und vorzugsweise höchstens 87 Gew.-% $SiO_2$.

Gemäß einer Variante des Glasprodukts umfasst das Glas zusätzlich zur Komponente $SiO_2$ weiterhin die Komponente $Al_2O_3$, vorzugsweise bis zu einem Gehalt von höchstens 25 Gew.-% und insbesondere vorzugsweise zu mindestens 3 Gew.-%, wobei weiterhin auch $B_2O_3$ vom Glas umfasst sein kann.

Gemäß einer anderen Variante des Glasprodukts umfasst das Glas zusätzlich zur Komponente $SiO_2$ weiterhin die Komponente $B_2O_3$, vorzugsweise zu mindestens 5 Gew.-% und insbesondere vorzugsweise zu höchstens 25 Gew.-%, wobei weiterhin auch $Al_2O_3$ vom Glas umfasst sein kann.

Als Li-Al-Si-Glas kann insbesondere ein Glas mit einem $Li_2O$-Gehalt von 4,6 Gew.-% bis 5,4 Gew.-% und einem $Na_2O$-Gehalt von 8,1 Gew.-% bis 9,7 Gew.-% und einem $Al_2O_3$-Gehalt von 16 Gew.-% bis 20 Gew.-% verwendet werden.

Als zu einer Glaskeramik keramisierbares Glas oder auch Grünglas kann beispielsweise ein Li-Al-Si-Glas mit einer Zusammensetzung umfassend $Li_2O$ 3,0 - 4,2; $Al_2O_3$ 19 - 23, $SiO_2$ 60 - 69 Gew.-% sowie $TiO_2$ und $ZrO_2$ verwendet werden.

Als Borosilikatglas kann ein Glas verwendet werden, welches die folgenden Komponenten enthält (in Gew.-%):

| | |
|---|---|
| $SiO_2$ | 70 - 87 |
| $B_2O_3$ | 7 - 25 |
| $Na_2O + K_2O$ | 0,5 - 9 |
| $Al_2O_3$ | 0 - 7 |
| CaO | 0 - 3 |

umfasst.

Als Borosilikatglas kann auch ein Glas insbesondere mit der nachfolgenden Zusammensetzung verwendet werden:

| | |
|---|---|
| $SiO_2$ | 70-86 Gew.-% |
| $Al_2O_3$ | 0-5 Gew.-% |
| $B_2O_3$ | 9,0-25 Gew.-% |
| $Na_2O$ | 0,5-5,0 Gew.-% |
| $K_2O$ | 0-1,0 Gew.-% |
| $Li_2O$ | 0-1,0 Gew.-%, |

oder auch ein Glas, insbesondere ein Alkaliborosilikatglas verwendet werden, welches enthält

| | |
|---|---|
| $SiO_2$ | 78,3-81,0 Gew.-% |
| $B_2O_3$ | 9,0-13,0 Gew.-% |
| $Al_2O_3$ | 3,5-5,3 Gew.-% |
| $Na_2O$ | 3,5-6,5 Gew.-% |
| $K_2O$ | 0,3-2,0 Gew.-% |
| CaO | 0,0-2,0 Gew.-%, |

oder auch ein Glas, insbesondere ein Alkaliborosilikatglas, welches die folgenden Komponenten in Gew.-% umfasst:

| | |
|---|---|
| $SiO_2$ | 55 bis 85 |
| $B_2O_3$ | 3 bis 20 |
| $Al_2O_3$ | 0 bis 15 |
| $Na_2O$ | 3 bis 15 |
| $K_2O$ | 3 bis 15 |
| ZnO | 0 bis 12 |
| $TiO_2$ | 0,5 bis 10 |

(fortgesetzt)

| | |
|---|---|
| CaO | 0 bis 0,1. |

Als alkalifreies Erdalkalisilikatglas kann beispielsweise ein Glas mit der folgenden Zusammensetzung in Gew.-% verwendet werden:

| | |
|---|---|
| $SiO_2$ | 58 bis 65 |
| $B_2O_3$ | 6 bis 10,5 |
| $Al_2O_3$ | 14 bis 25 |
| MgO | 0 bis 3 |
| CaO | 0 bis 9 |
| BaO | 3 bis 8 |
| ZnO | 0 bis 2, |

wobei gilt, dass die Summe des Gehalts von MgO, CaO und BaO dadurch gekennzeichnet ist, dass sie im Bereich von 8 bis 18 Gew.-% liegt.

Ein silikatisches Glas zur Herstellung der vorliegend offenbarten Glasprodukte kann weiterhin umfassen folgende Komponenten in Gew.-% auf Oxidbasis:

| | |
|---|---|
| $SiO_2$ | 50 bis 65, vorzugsweise 55 bis 65 |
| $Al_2O_3$ | 15 bis 20 |
| $B_2O_3$ | 0 bis 6 |
| $Li_2O$ | 0 bis 6 |
| $Na_2O$ | 8 bis 16 |
| $K_2O$ | 0 bis 5 |
| MgO | 0 bis 5 |
| CaO | 0 bis 7, bevorzugt 0 bis 1 |
| ZnO | 0 bis 4, bevorzugt 0 bis 1 |
| $ZrO_2$ | 0 bis 4 |
| $TiO_2$ | 0 bis 1, bevorzugt im Wesentlichen $TiO_2$-frei |

Weiterhin können im Glas enthalten sein zu 0 bis 1 Gew.-%: $P_2O_5$, SrO, BaO; sowie Läutermittel zu 0 bis 1 Gew.-%: $SnO_2$, $CeO_2$ oder $As_2O_3$ oder andere Läutermittel, sowie gegebenenfalls weitere Komponenten, beispielsweise Fluor.

Nach einem zweiten Aspekt außerhalb der Erfindung wird hiermit ein Glasprodukt beschrieben, insbesondere ein scheibenförmiges Glasprodukt, vorzugsweise mit einer Dicke von höchstens 1100 μm und mindestens 15 μm, umfassend ein silikatisches Glas, wobei das Glasprodukt weniger als 3 Blasen pro Kilogramm Glas aufweist, vorzugsweise bei einer Größe der Blasen von weniger als 200 μm, wobei als Größe der Blase der jeweils in irgendeiner Raumrichtung größte Abstand innerhalb der Blase verstanden wird. Gemittelte Durchmesser von Blasen können somit kleiner als deren vorstehend definierte Größe sein.

Dies ist vorteilhaft. Denn Partikel und/oder Blasen, insbesondere Edelmetall umfassende Partikel, sind Glasfehler, welche zu Ausschuss führen können. Ob ein Glasprodukt, welches einen Glasfehler, wie einen Partikel oder eine Blase, umfasst, Ausschuss ist oder für eine bestimmte Anwendung noch akzeptabel ist, ist dabei sowohl eine Frage der Glasfehlerfrequenz, also der Häufigkeit, mit welcher ein solcher Fehler auftritt, wobei dieser üblicherweise pro Gewichtseinheit Glas angegeben wird, also auch eine Frage der Glasfehlergröße. So führen Glasfehler ab einer bestimmten Größe immer zu Ausschuss, jedoch können kleinere Glasfehler durchaus noch für eine bestimmte Anwendung eines Glasprodukts unbedenklich sein, sofern die Glasfehler klein genug sind und nicht zu viele von ihnen auftreten.

Gerade für Spezialgläser steigen dabei die Anforderungen immer weiter. Daher besteht ein kontinuierlicher Bedarf daran, Glasprodukte mit nur sehr geringen Anteilen an Fehlern bereitzustellen, auch um gerade in sehr anspruchsvollen Produktfeldern weiter wirtschaftlich produzieren zu können.

Solche Glasprodukte mit verbesserter Produktqualität, nämlich verminderter Partikel- und/oder Blasenhäufigkeit und/oder nur kleinen Glasfehlern, wie Partikeln und/oder Blasen, können auf überraschend einfache Weise in einem Verfahren zum Herstellen eines Glasprodukts gemäß Anspruch 1 hergestellt werden.

Es hat sich nämlich gezeigt, dass Art, Menge und/oder Größe der auftretenden Defekte durch die Art der Stromführung in dem oder den Edelmetall umfassenden Bauteilen, welche mit einer Glasschmelze in Kontakt stehen, beeinflusst werden können.

Weiterhin hat sich vorteilhaft gezeigt, dass es mit dem Verfahren nach der vorliegenden Offenbarung auch möglich ist, auf hinsichtlich der Stabilität und Haltbarkeit eines Edelmetall umfassenden Bauteils kritische Komponenten in der Glaszusammensetzung zu verzichten.

So ist es vorteilhaft mit dem Verfahren nach Ausführungsformen auch möglich, Gläser zu erschmelzen, ohne $SnO_2$ als Läutermittel zu verwenden. Insbesondere ist es möglich, beispielsweise mit Kochsalz zu läutern. Allgemein, ohne Beschränkung auf die vorstehend genannten Ausführungen eines Glasprodukts, ist es daher möglich, dass das Glasprodukt ein Glas umfasst, welches höchstens 2500 ppm, bevorzugt 2000 ppm, besonders bevorzugt höchstens 1000ppm, mehr bevorzugt höchstens 500 ppm $SnO_2$, bevorzugt sogar höchstens 100 ppm, bezogen jeweils auf das Gewicht, umfasst. Mit anderen Worten kann das Glasprodukt allgemein ein Glas umfassen, welches $SnO_2$ höchstens in Form von unvermeidbaren Verunreinigungen umfasst. Das Glasprodukt kann weiterhin allgemein ein Glas umfassen, welches Chlorid, Cl-, umfasst, und zwar vorzugsweise mindestens 100 ppm und bis zu 2500 ppm, jeweils bezogen auf das Gewicht.

Eine solche Ausgestaltung des Glasprodukts ist vorteilhaft, denn mit anderen Worten umfasst das Glasprodukt auf diese Weise ein Glas, welches mit einem schonenderen Läutermittel erschmolzen werden kann, welches insbesondere Edelmetall umfassende Bauteile wesentlich weniger stark angreift und auf diese Weise auch vorteilhaft zur Verminderung von Partikelbildung und/oder Blasenbildung beitragen kann bzw. beiträgt.

Die elektrochemischen Reaktionen sind im Allgemeinen stromdichteabhängig an dem Ort der Reaktion.

Demgemäß offenbart die Erfindung ein Verfahren zum Herstellen eines Glasprodukts gemäß Anspruch 1.

Das erfindungsgemäße Leitungssystem dient bevorzugt nur dem Transport sowie gegebenenfalls der Temperierung der silikatischen Glasschmelze während dieses Transports, jedoch nicht weiteren Funktionen wie beispielsweise der Läuterung oder Homogenisierung.

Im Rahmen der vorliegenden Offenbarung wird unter einem ein Edelmetall umfassenden Leitungssystem verstanden, dass das Leitungssystem beispielsweise überwiegend, also mindestens 50 Gew.-%, oder im Wesentlichen, also zu mindestens 90 Gew.-%, oder auch vollständig aus Edelmetall oder einer Legierung umfassend wenigstens ein Edelmetall, beispielsweise auch einer Edelmetalllegierung, bestehen kann. Aber auch andere Ausgestaltungen sind denkbar. Im Rahmen der vorliegenden Offenbarung kann ein Edelmetall umfassendes Leitungssystem beispielsweise auch so ausgestaltet sein, dass das Leitungssystem beispielsweise in einem Leitungselement, wie einem rohrförmigen Leitungssystem, eine an dessen Innenseite angeordnete Beschichtung aufweist, welche wenigstens ein Edelmetall umfasst.

Im Gegensatz zum Stand der Technik werden also nicht nur die zeitlich gemittelten Stromdichten berücksichtigt, sondern im Wesentlichen alle zu jedem Zeitpunkt fließenden Stromdichten. Dies ist insofern verwunderlich und in keiner Publikation festgehalten, dass eine Pulsmodulation Einfluss auf die Defektbildung hat.

Dies ist zunächst besonders überraschend, wenn das Leitungssystem ein im Wesentlichen rohrförmiges Leitungselement aufweist, welches an dessen Innenseite eine Edelmetall umfassende Beschichtung aufweist und bei welchem der Wechselstrom im Wesentlichen in Längsrichtung des rohrförmigen Leitungselements geführt ist, denn dann wäre auch anzunehmen, dass der Wechselstrom vollständig in dem Edelmetall geführt ist und der Raum außerhalb des Edelmetalls spannungsfrei ist, sodass die Form des Spannungs- und Stromverlaufs nur geringen Einfluss auf Defekte im Glas haben sollte.

Bei einer bevorzugten Ausführungsform ist der Wechselstrom im Wesentlichen sinusförmig und weist lediglich eine einzige Grundfrequenz $\omega_0$ und im Wesentlichen keine weiteren Frequenzanteile auf.

Bei bevorzugten Ausführungsformen beträgt die Abweichung des zeitlichen Integrals des Wechselstromsignals über eine Vollwelle von dem zeitlichen Integral einer idealen sinusförmigen Pulssignalkurve weniger als 10%, vorzugsweise weniger als 5 % und besonders bevorzugt weniger als 2 %.

Bei einem weiteren, besonders bevorzugten Verfahren zum Herstellen eines Glasprodukts, vorzugsweise eines scheibenförmigen Glasprodukts, wird eine silikatische Glasschmelze durch ein Edelmetall umfassendes Leitungssystem von einem Bereich eines Aggregats zum Herstellen eines Glasprodukts in einen anderen Bereich des Aggregats zum Herstellen eines Glasprodukts überführt und ist das Edelmetall umfassende Leitungssystem stromführend in der Form, dass durch einen durch das Edelmetall geführten elektrischen Strom Joulesche Wärme in dem Edelmetall umfassenden Leitungssystem, insbesondere dem Edelmetall, erzeugt wird, wobei bei der Grundfrequenz $\omega_0$ der Phasenwinkel $\theta_0$ zwischen Strom und Spannung gemessen wird.

Diese Messung der Grundfrequenz $\omega_0$, bei welcher der Phasenwinkel $\theta_0$ zwischen Strom und Spannung gemessen wird, wird vorzugsweise zumindest einmal für jedes Glas einer silikatischen Glasschmelze, welches für das vorliegend offenbarte Verfahren verwendet wird, durchgeführt und zwar jeweils vor oder mit Beginn des Verfahrens. Obwohl es prinzipiel ausreicht, die Grundfrequenz $\omega_0$ nur bei dem Wert oder infinitesimal nahe bei dem Wert zu messen, bei welchem der Phasenwinkel $\theta_0$ zwischen Strom und Spannung als Funktion der Frequenz $\omega_0$ bei einem lokalen Minimum liegt, oder an denjenigen Stellen zu messen, an welchen der Phasenwinkel $\theta_0$ zwischen Strom und Spannung kleiner als $\pm 10°$ ist, bevorzugt kleiner als $\pm 5°$ und besonders bevorzugt kleiner als $\pm 2°$ ist, hat es sich als vorteilhaft erwiesen, dennoch die Grundfrequenz vorzugsweise in einem Bereich von etwa $4 * 10^{-2}$ Hz bis etwa $10^6$ Hz zu messen oder durchzustimmen, um die entsprechenden, zuvor benannten Bereiche des Phasenwinkels mit höherer Prozesssicherheit erkennen zu können.

Hieraus ergibt sich dann für das jeweilige Glas der Winkel $\theta$, bei welchem der Phasenwinkel $\theta_0$ zwischen Strom und Spannung als Funktion der Frequenz bei einem lokalen Minimum liegt, an welchem somit die lokale Ableitung des Phasenwinkels $\theta$ nach der Frequenz $\omega$ den Wert Null annimmt und es ergeben sich auch diejenigen Bereiche, innerhalb welcher der Phasenwinkel $\theta_0$ zwischen Strom und Spannung kleiner als $\pm 10°$ ist, bevorzugt kleiner als $\pm 5°$ und besonders bevorzugt kleiner als $\pm 2°$ ist.

Hierbei gibt der Begriff, dass zumindest einmal für die silikatische Glasschmelze bei der Grundfrequenz $\omega_0$ der Phasenwinkel $\theta_0$ zwischen Strom und Spannung gemessen wird, auch an, dass die gemessenen Werte des Phasen-winkels $\theta$ zwischen Strom und Spannung als Funktion der Frequenz $\omega$ dann für jede silikatische Glasschmelze vorliegen, welche in dem vorliegend offenbarten Verfahren verwendet wird. Soweit die Glasschmelze in deren Zusammensetzung unverändert bleibt, kann dann diese Messung für die nachfolgend beschriebenen Einstellungen der Grundfrequenz $\omega_0$ weiter beibehalten werden, insbesondere auch für weitere Durchführungen des Verfahrens beibehalten werden, ohne dass dieser Phasenwinkel $\theta_0$ nochmals gemessen werden muss.

Wird jedoch die Zusammensetzung der silikatischen Schmelze geändert, dies bedeutet beispielsweise, dass deren Bestandteile geändert werden, wird vorzugsweise für die silikatische Glasschmelze mit der geänderten Zusammensetzung des Glases zumindest einmal bei der Grundfrequenz $\omega_0$ der Phasenwinkel $\theta_0$ zwischen Strom und Spannung erneut wie vorstehend beschrieben gemessen. Auch die dabei erhaltenen Messwerte können dann, soweit die geänderte Zusammensetzung der silikatischen Schmelze beibehalten wird, solange weiter verwendet werden, wie die geänderte Zusammensetzung der silikatischen Schmelze unverändert bleibt. Als Änderung der Zusammensetzung des Glases der siklikatischen Schmelze wird eine Veränderung der Zusammensetzung angesehen, bei welcher zumindest ein Bestandteil des Glases der silikatischen Schmele um mehr als +/- 0,5 Gew.-% geändert wird.

Basierend auf den vorstehend beschriebenen Messungen wird die Grundfrequenz $\omega_0$ basierend auf dem gemessenen Phasenwinkel $\theta_0$ zwischen Strom und Spannung für die weitere Durchführung des Verfahrens eingestellt.

Besonders bevorzugt wird die Grundfrequenz $\omega_0$ so eingestellt , dass der Phasenwinkel $\theta_0$ zwischen Strom und Spannung als Funktion der Frequenz bei einem lokalen Minimum liegt, an welchem die lokale Ableitung des Phasen-winkels $\theta$ nach der Frequenz $\omega$ den Wert Null annimmt.

Neben dieser optimalen und bevorzugten Einstellung ist der Phasenwinkel $\theta_0$ zwischen Strom und Spannung während der Durchführung des Verfahrens kleiner als $\pm 10°$, bevorzugt kleiner als $\pm 5°$ und besonders bevorzugt kleiner als $\pm 2°$ sein. Im Sinne dieser unmittelbar vorstehenden Angabe bedeutet der Begriff des Phasenwinkels $\theta_0$, dass der tiefgestellte Index "0" angibt, dass diese Phasenwinkel $\theta_0$ nicht nur bei der Frequenz, für welche das Minimum der Ableitung des Phasenwinkels $\theta$ nach der Frequenz $\omega$ vorliegt, sondern innerhalb des Bereichs von Phasenwinkeln $\theta$ zwischen Strom und Spannung von kleiner als $\pm 10°$, bevorzugt kleiner als $\pm 5°$ und besonders bevorzugt kleiner als $\pm 2°$ liegt und es werden im Rahmen der vorliegenden Offenbarung diese Phasenwinkel $\theta_0$ entsprechend auch als minimierte Phasenwinkel bezeichnet.

In gleicher Weise bedeutet der tiefgestellte Index "0" bei der Angabe der Frequenz $\omega$, dass die Frequenz $\omega_0$ jeweils eine Frequenz ist, bei welcher ein minimierter Phasenwinkel $\theta_0$ im Sinne der vorsteehenden Definition vorliegt.

Bei den vorliegend beschriebenen Ausführungsfromen können auch zeitabhängige, insbesondere zeitlich periodsche Spannungen mit einer Spannungskurve $U(\omega)$, welche den in dem vorliegend offenbarten Verfahren verwendeten Wechselstrom erzeugt, verwendet werden, deren Signalanteile mehr als eine diskrete Frequenz $\omega$, somit beispielsweise die diskreten Frequenzen $\omega_1, \omega_2, \omega_3, ...$ bis $\omega_n$ aufweisen, wobei $n$ eine natürliche Zahl ungleich Null ist, und wobei sich deren insgesamte dann aus der Überlagerung der einzelnen Spannungssignale ergebende Spannungskurve $U(\omega)$ wie folgt ergibt:

$$U(\omega) = U_1(\omega_1) + U_2(\omega_2) + U_3(\omega_3) + ... U_n(\omega_n)$$

Hierbei ist $U_1(\omega_1), U_2(\omega_2), U_3(\omega_3) ... U_n(\omega_n)$ jeweils ein Spannungssignal mit einer sinus- oder cosinusförmigen Gestalt mit der jeweiligen Frequenz $\omega_1, \omega_2, \omega_3, ... \omega_n$. Derarartige Signale können jeweils mit einem Sinusgenerator erzeugt, entsprechend überlagert und danach gegebenfalls - wie anwendungsabhängig gefordert - verstärkt werden.

Auch bei Spannungskurven mit mehreren diskreten Frequenzanteilen wird für jeden der diskreten Frequenzan-teile mit $\omega_1, \omega_2, \omega_3, ...$ bis $\omega_n$ die nachfolgende, und vorstehend für die Grundfrequenz $\omega_0$ angegebene Bedingung erfüllt, dass für jeden dieser Frequenzanteile mit $\omega_1, \omega_2, \omega_3, ...$ bis $\omega_n$ jeweils gilt, dass der Phasenwinkel bei der jeweiligen Frequens $\theta_1(\omega_1), \theta_2(\omega_2), \theta_3(\omega_3), ...$ bis $\theta_n(\omega_n)$ jeweils kleiner als $\pm 10°$ ist, bevorzugt kleiner als $\pm 5°$ und besonders bevorzugt kleiner als $\pm 2°$ ist.

Bei einer weiteren Ausführungsform können auch zeitabhängige, insbesondere zeitlich periodsche Spannungen mit einer Spannungskurve $U(\omega)$, welche den in dem vorliegend offenbarten Verfahren verwendeten Wechselstrom erzeugt, verwendet werden, deren Signalanteile ein kontinuierliches Spektrum von sinus- oder cosinusförmigen Signalanteilen $U_i(\omega_i)$ mit verschiedenen Frequenzanteilen $\omega_i$ aus dem Spektralbereich oder Frequenzintervall von $\omega x$ bis $\omega_y$ aufweisen, wobei für die Frequenz $\omega_i$ eines jeden dieser Signalanteile gilt:

$$\omega x < \omega_i < \omega_y$$

wobei

$\omega x$ diejenige Frequenz darstellt, bei welcher ein Phasenwinkel $\theta$ zwischen Strom und Spannung von -10° vorliegt, und
$\omega_y$ diejenige Frequenz darstellt, bei welcher ein Phasenwinkel $\theta$ zwischen Strom und Spannung von +10° vorliegt.

Signale mit derartigen Frequenzahteilen können beispielsweise mit einem Rauschgenerator erzeugt werden, welcher im Wesentlichen weißes Rauschen als Ausgangsspannungssignal bereitstellt, dessen Ausgangsspannungssignal dann mit einem Bandpassfilter gefiltert wird, dessen Durchlassband die Frequenzen innerhalb eines Intervalls von etwa $\omega_x$ bis etwa $\omega_y$ durchlässt. Ein derart erhaltenes Signal kann dann anwendungsspezifisch entsprechend weiter verstärkt werden.

Bei den vorliegend offenbarten Gläser beträgt, jedoch für die vorliegend offenbarten Temperaturbereiche der silikatischen Schmelze ohne Beschränkung der Allgemeinheit, die Grundfrequenz $\omega_0$ mindestens $5 * 10^2$ Hz, vorzugsweise mindestens $1 * 10^3$ Hz, und erstreckt sich bis höchstens $1{,}5 * 10^4$ Hz, bevorzugt $2 * 10^4$ Hz. In gleicher Weise liegen die Frequenzen $\omega_1$, $\omega_2$, $\omega_3$, ... bis $\omega_n$ sowie $\omega_i$ innnerhalb des Intervalls von mindestens $5 * 10^2$ Hz, vorzugsweise mindestens $1 * 10^3$ Hz, bis jeweils höchstens $1{,}5 * 10^4$ Hz, vorzugsweise bis höchstens $2 * 10^4$ Hz.

Es wird bevorzugt, dass weitere Anteile der Spannungskurve $U(\omega)$, welche Frequenzanteile aufweisen, die kleiner als $\omega_x$ sind, im zeitlichen Mittel des Betrags dieser Frequenzanteile kleiner sind als 15 %, bevorzugt weniger als 5 % und besonders bevorzugt weniger als 3 % des zeitlich gemittelten Wertes des Betrags der Spannungskurve $U(\omega)$ betragen,

Es wird ebenfalls bevorzugt, dass weitere Anteile der Spannungskurve $U(\omega)$, welche Frequenzanteile aufweisen, die größer als $\omega_y$ sind, wie beispielsweise Oberwellen, im zeitlichen Mittel des Betrags dieser Frequenzanteile kleiner sind als 15 % bevorzugt weniger als 5 % und besonders bevorzugt weniger als 3 % des zeitlich gemittelten Wertes des Betrags der Spannungskurve $U(\omega)$ betragen.

Überraschenderweise hat sich gezeigt, dass bei einer solchen Prozessführung, welche auch als Prozessführung mit minimiertem Phasenwinkel bezeichnet wrd, Glasprodukte mit deutlich geringeren Partikel- und/oder Blasenzahlen erhalten werden als bei herkömmlicher Widerstandbeheizung des Edelmetall umfassenden Bauteils.

Worauf dieser Effekt beruht, ist den Erfindern nicht bekannt. Jedoch wird vermutet, dass dies daran liegt, dass bei einer Minimierung des Phasenwinkels die Ladungsträger im Edelmetall umfassenden Bauteil dem Wechselstromsignal besser folgen können oder sich die Bewegung positiver mit der Bewegung negativer Ladungsträger ausgleicht und dies zu geringen Belastungen des Edelmetall umfassenden Bauteils führt, was in der Folge dessen mechanische Stabilität verbessert. Dies führt dann zu dem beobachteten geringeren Partikeleintrag in das Glasprodukt.

Bei dem vorliegend offenbarten Verfahren lag die Temperatur der Glasschmelze zwischen 1200°C und 1500°C. In Produktionsbedingungen sind Temperaturen der Glasschmelze zwischen 1000°C und 1650°C denkbar.

Mit dem vorliegend offenbarten Verfahren wird ein Glasprodukt, insbesondere ein scheibenförmiges Glasprodukt, hergestellt oder ist dieses herstellbar mit einer Dicke von höchstens 1100 $\mu$m und mindestens 15 $\mu$m, umfassend ein silikatisches Glas, wobei das Glasprodukt weniger als vier Partikel pro Kilogramm Glas eines Edelmetall umfassenden Materials aufweist, vorzugsweise weniger als drei Partikel pro Kilogramm Glas eines Edelmetall umfassenden Materials, vorzugsweise bei einer Größe der Partikel von weniger als 200 $\mu$m.

Mit dem vorliegend offenbarten Verfahren wird ein Glasprodukt, insbesondere ein scheibenförmiges Glasprodukt, hergestellt oder ist dieses herstellbar mit einer Dicke von höchstens 1100 $\mu$m und mindestens 15 $\mu$m, umfassend ein silikatisches Glas, wobei das Glasprodukt weniger als 3 Blasen pro Kilogramm Glas aufweist, vorzugsweise bei einer Größe der Blasen von weniger als 200 $\mu$m.

Im Rahmen der vorliegenden Offenbarung gelten die folgenden Definitionen:

Im Rahmen der vorliegenden Offenbarung wird als Edelmetall ein Metall bezeichnet, welches aus der folgenden Auflistung stammt: Platin, Rhodium, Iridium, Osmium, Rhenium, Ruthenium, Palladium, Gold, Silber und Legierungen dieser Metalle.

Ein Bauteil wird im Rahmen der vorliegenden Offenbarung als Edelmetall umfassend bezeichnet, wenn es mindestens ein Metall aus der obigen Auflistung in signifikanter Weise umfasst, also in einem Gehalt, welcher über unvermeidliche Spuren hinausgeht, insbesondere mindestens 0,1 Gew.-% beträgt, vorzugsweise mindestens 1 Gew.-%, insbesondere vorzugsweise mindestens 5 Gew.-%. Insbesondere ist hiermit auch umfasst ein Bauteil, welches überwiegend, also zu mehr als 50 Gew.-%, oder im Wesentlichen, also zu mehr als 90 Gew.-%, oder sogar vollständig aus wenigstens einem Edelmetall oder einer Mischung von Edelmetallen oder einer Legierung eines Edelmetalls oder mehrerer Edelmetalle besteht. Eine typischerweise eingesetzte Legierung ist beispielsweise Ptlr1 und/oder Ptlr5, also eine Platinlegierung mit 1 Gew.-% Iridium-Anteil bzw. 5 Gew.-% Iridium-Anteil.

Die Glasschmelzen der vorliegenden Erfindung umfassen oxidische Schmelzen, insbesondere siliziumhaltige oxidische Schmelze, mithin also silikatische Schmelzen.

Im Rahmen der vorliegenden Offenbarung wird unter einem Glas ein amorphes Material verstanden, welches in einem Schmelzprozess erhältlich ist. Unter einem Glasprodukt wird ein Produkt (oder Erzeugnis oder Artikel) verstanden, welches das Material Glas umfasst, insbesondere auch überwiegend, also zu mehr als 50 Gew.-%, oder im Wesentlichen, also zu mehr als 90 Gew.-%, oder sogar vollständig aus Glas besteht.

Unter einem scheibenförmigen Produkt wird im Rahmen der vorliegenden Offenbarung ein Produkt verstanden, bei welchem die laterale Abmessung in einer ersten Raumrichtung eines kartesischen Koordinatensystems wenigstens eine Größenordnung geringer ist als in den beiden anderen, zur ersten Raumrichtung senkrechten, Raumrichtungen. Diese erste Raumrichtung kann auch als die Dicke des Produkts verstanden werden, die beiden weiteren Raumrichtungen als die Länge und Breite des Produkts. Mit anderen Worten ist also bei einem scheibenförmigen Produkt die Dicke wenigstens eine Größenordnung geringer als dessen Länge und Breite.

Unter einer Blase wird im Rahmen der vorliegenden Offenbarung ein fluidgefüllter, in der Regel gasgefüllter, Hohlraum in einem Material und/oder in einem Produkt verstanden. Eine Blase kann geschlossen sein, also in jeder Richtung von dem Material, beispielsweise dem Material eines aus dem Material bestehenden Produkts, umschlossen sein, oder offen vorliegen, beispielsweise wenn die Blase am Rande des Produkts liegt und dann nicht vollständig von dem das Produkt bildenden oder vom Produkt umfassten Material umschlossen vorliegt.

Unter einem Partikel wird im Rahmen der vorliegenden Offenbarung insbesondere ein Partikel aus oder zumindest umfassend ein Edelmetall verstanden. Insbesondere können Partikel Platin umfassen oder eine Platinlegierung oder aus Platin oder einer Platinlegierung ausgebildet sein. Die Morphologie der Partikel kann unterschiedlich ausgebildet sein. Möglich sind beispielsweise kugelige Partikel, also Partikel, welche zumindest annähernd als Kugel ausgebildet sein, aber auch nadelige oder nadelförmige Partikel oder Stäbe sind möglich. Die Abmessungen der Partikel können bis zu 100 μm betragen, typisch sind Abmessungen der Partikel bis zu etwa 30 μm. Die im Rahmen der vorliegenden Offenbarung angegebenen Abmessungen beziehen sich wie bereits vorstehend definiert jeweils auf die maximale laterale Abmessung des entsprechenden Partikels oder der entsprechenden Blase. Bei einem nadelförmig ausgebildeten Partikel ist die angegebene Größe also die Länge in Richtung der längsten Erstreckung des Partikels.

Unter einem Aggregat zum Herstellen eines Glasprodukts wird eine Vorrichtung verstanden, in welcher die für das Herstellen von Glas und von Produkten aus Glas üblichen Verfahrensschritte ablaufen oder ablaufen können. Die üblichen Verfahrensschritte umfassen dabei das Vorlegen und Schmelzen eines Gemenges, das Läutern, das Konditionieren und das Heißformgeben. Unter einem Bereich eines solchen Aggregats werden Bereiche der Vorrichtung verstanden, in welcher bestimmte Verfahrensschritte durchgeführt werden, wobei diese Bereiche räumlich von anderen Bereichen der Vorrichtung getrennt vorliegen können, sodass beispielsweise Überführungsvorrichtungen von einem Bereich der Vorrichtung in einen anderen vorliegen können. Solche Überführungsvorrichtung, in welchen die Glasschmelze von einem Bereich des Aggregats in einen anderen Bereich überführt wird, werden im Rahmen der vorliegenden Offenbarung auch als Leitungselement oder Leitungssystem bezeichnet. Ein solches Leitungselement oder Leitungssystem kann auch als Rinne bezeichnet werden. Typische Bereiche eines Aggregats zum Herstellen eines Glasprodukts sind beispielsweise die Läuterkammer oder die Arbeitswanne. Insbesondere kann die Vorrichtung zum Herstellen eines Glasprodukts umfassen eine sogenannte Einschmelzwanne, in welcher beispielsweise das Gemenge aufgeschmolzen wird, eine Läuterwanne, in der die Glasschmelze geläutert wird, und eine Absteh- bzw. Arbeitswanne, in der konditioniert wird. Die Homogenisierung erfolgt in der Regel in einem Rührteil, in welchem die Glasschmelze durch einen Rührstab homogenisiert wird.

Eine solche optimierte Prozessführung mit minimiertem Phasenwinkel ist beispielsweise möglich über eine Amplitudenmodulation. Üblicherweise werden zur Erzeugung des Wechselstroms für die direkte Beheizung eines Leitungssystems, welches eine Glasschmelze führt, Thyristorsteller verwendet. Werden diese beibehalten, kann eine möglichst sinusförmige oder zumindest sinusformähnliche Pulssignalkurve erzielt werden mit einer weiteren Schaltung, die die Phasenanschnitte derart verschmiert, dass ein zumindest teilweise sinusförmiger Signalverlauf entsteht.

Dabei kann die Schaltung beispielsweise zusätzlich zu den antiparallel geschalteten Thyristoren primärseitig einen weiteren Stelltransformator umfassen. Damit ist es möglich, die primärseitige Spannung soweit wie nötig auf den Arbeitspunkt zu reduzieren, so dass die weiteren Phasenanschnitte geringfügig sind und die Signalkurvenform keine Unstetigkeiten mehr aufweist oder zumindest nur noch sehr geringe und somit deutlich sinusförmiger ist.

Es ist weiterhin nach einer Ausführungsform des Verfahrens bevorzugt, wenn der Oberwellenanteil des zeitlich gemittelten Betrags der Pulssignalkurve weniger als 15 %, bevorzugt weniger als 5 % und besonders bevorzugt weniger als 3 % beträgt.

Beschreibung der Zeichnungen

Im Folgenden wird die Erfindung anhand von Zeichnungen weiter erläutert. Es zeigen

Fig. 1             eine schematische Darstellung eines Versuchsaufbaus,

Fig. 2 und 3     fotographische Abbildungen silikatischer Glasschmelzen aus einem Versuchsaufbau nach Fig. 1,

Fig. 4             eine schematische Darstellung eines weiteren Versuchsaufbaus zur elektrochemischen Impedanzspektroskopie, sowie

Fig. 5             ein Impendanzspektrum aus einem Versuchsaufbau nach Fig. 4, welches den Betrag der komplexen Impedanz Z als Funktion der Frequenz $\omega$ zeigt,

Fig. 6             ein Impedanzspektrum aus einem Versuchsaufbau nach Fig. 4, welches den Phasenwinkel $\Theta$ als Funktion der Frequenz $\omega$ zeigt,

Fig. 7             ein im Wesentlichen rohrförmiges Leitungselement eines Leitungssystems, welches an dessen Innenseite eine zumindest ein Edelmetall umfassende Beschichtung aufweist, und bei welchem mittels eines Generators G ein Wechselstrom durch das Edelmetall geführt wird,

Fig. 8             das Bild eines Oszillographen mit einer darauf angezeigten periodischen Spannungskurve als Funktion der Zeit, wobei diese Spannungskurve eine starke Abweichung von einer Sinusform zeigt, welche im Wesentlichen durch eine Phasenanschnittsteuerung bewirkt ist,

Fig. 9             das Bild eines Oszillographen mit einer darauf angezeigten periodischen Spannungskurve als Funktion der Zeit, wobei diese Spannungskurve eine nur sehr geringe Abweichung von einer Sinusform zeigt,

Fig. 10            den partikulären Eintrag in eine Glasschmelze bei verschiedenen Formen des Wechselstroms, welcher zur Beheizung einer in einem Leitungselement mit Edelmetall angeordneten Glasschmelze verwendet wird, sowie

Fig. 11            ein Bild eines Oszillographen mit einer darauf gezeigten Spannungskurve zur Erläuterung des Stromflusses im Zeitraum $T_1$ in Fig. 10,

Fig. 12            ein Bild eines Oszillographen mit einer darauf gezeigten Spannungskurve zur Erläuterung des Stromflusses im Zeitraum $T_3$ in Fig. 10

Fig. 13            ein Prinzipschaltbild einer beispielhaften Schaltungsanordnung, sowie

Fig. 14 und 15   beispielhafte Rasterelektronenmikroskopbilder von Edelmetall umfassenden Partikeln

Fig. 16            ein weiteres, im Wesentlichen rohrförmiges Leitungselement eines Leitungssystems, welches an dessen Innenseite eine zumindest ein Edelmetall umfassende Beschichtung aufweist, und bei welchem mittels jeweils eines Generators G jeweils ein Wechselstrom durch das Edelmetall jeweils eines Abschnitts von drei Abschnitten, welche als Überlauf 0 (ÜL0), Überlauf 1 (ÜL1), Überlauf 2 (ÜL2) dargestellt sind, geführt wird.

Detaillierte Beschreibung der vorliegend offenbarten Ausführungsformen

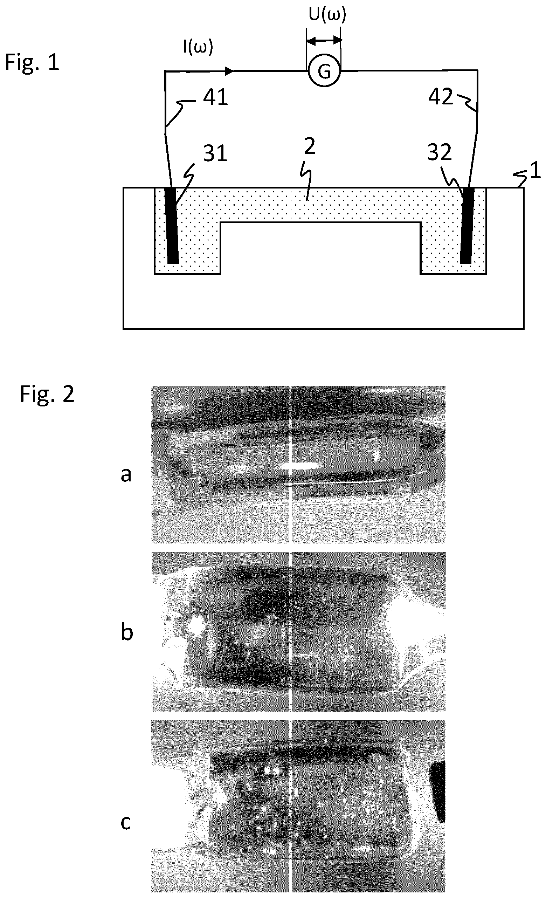

Fig. 1 zeigt eine schematische und nicht maßstabsgetreue Darstellung eines Versuchsaufbaus zur Ermittlung des Einflusses der Pulsmodulation bei der Erzeugung des Wechselstroms I($\omega$) in einer silikatischen Glasschmelze. In einem Tiegel aus einem SiO$_2$-umfassenden Refraktärmaterials, beispielsweise eines sogenannten QUARZAL®-Tiegels, wird eine silikatische Glasschmelze 2 erschmolzen.

Zwei gleich große Edelmetall umfassende Elektroden 31, 32, mit einer Fläche von 0,5 cm auf 1 cm, wurden in jeweils eine Hälfte des Tiegels 1 eingelassen. Die Tiegelhälften sind über eine Glasschmelzenbrücke verbunden, welches bedeutet, dass der zwischen den Elektroden 31, 32 fließende Strom I($\omega$) vollständig durch die Glasschmelze 2 geleitet wird. Die jeweilige Elektrode 31, 32 ist hier beispielhaft aus einer Edelmetall-Legierung ausgebildet, nämlich einer Legierung von Platin und Rhodium, welche auch als "PtRh10" bezeichnet werden kann, also 10 Gew.-% Rhodium und 90 Gew.-% Platin. Die Glasschmelze 2 war die Schmelze eines silikatischen Glases.

Der Raum, welcher den Tiegel 1 umgibt, wird mit Inertgas (hier Argon) gespült, um hinsichtlich der Edelmetall umfassenden Elektroden 31, 32 eine Gasphasentransportreaktion zu verhindern.

Der Tiegel 1 wird auf eine Temperatur von beispielsweise 1450°C in einem Ofen gebracht.

Zwischen den beiden Elektroden 31, 32 wurde dann mittels verschiedener Modulatoren innerhalb des Generators G, welcher eine Wechselstromquelle darstellt, die Signalform des fließenden Stromes I(ω) zwischen den Elektroden 31, 32 variiert, unter der Randbedingung, dass in jedem der Versuche zwischen den Elektroden 31, 32 eine geometrisch zeitgemittelte Stromdichte von 25mA/cm$^2$ fließt.

Es wurden die nachfolgend noch detaillierter beschriebenen drei Versuche durchgeführt, bei welchen die Elektroden 31, 32 jeweils der Modulation und dem Glasschmelzkontakt 24 Stunden ausgesetzt waren.

Nach der Wartezeit von 24 Stunden wurde eine der Elektroden 31, 32 aus der Tiegelhälfte entfernt und mit anhaftendem Glas schnell eingefroren. Fotografische Abbildungen hiervon sind in Fig. 2a bis 2c zu sehen.

In Fig. 2 ist zu erkennen, dass das von der Elektrode umfasste Edelmetall und die Struktur der jeweiligen Elektroden bei einer stromlosen Erwärmung (Abbildung a von Fig. 2) und einer zumindest annähernd sinusartigen Signalkurve (Abbildung b von Fig. 2) keine Veränderungen der Kornstruktur aufweisen.

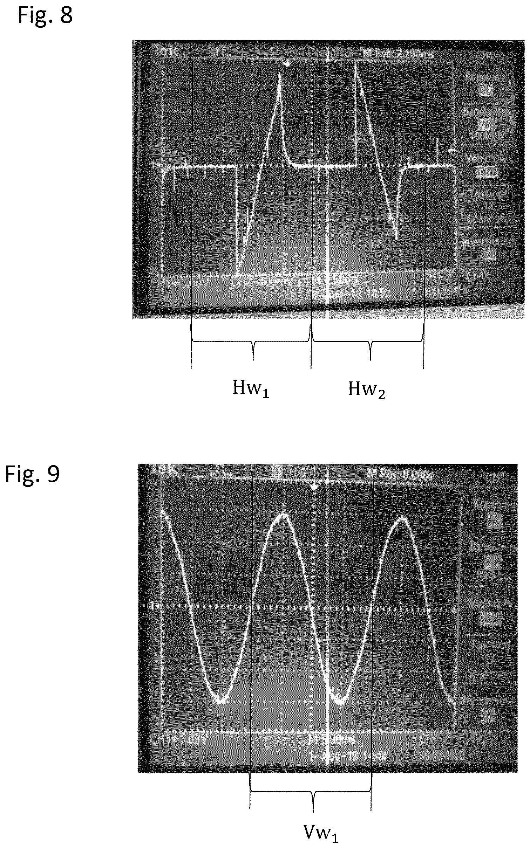

Figur 9 zeigt beispielhaft das Bild eines Oszillographen mit einer darauf angezeigten periodischen Spannungskurve U(ω) als Funktion der Zeit bei einer Grundfrequenz ω$_0$, wobei diese Spannungskurve eine nur sehr geringe Abweichung von einer Sinusform zeigt, und die Form des Wechselstroms I(ω) repräsentiert. Hierbei ist eine beispielhafte sinusförmige Vollwelle mit dem Intervall Vw$_1$ markiert. Die Grundfrequenz ω$_0$ betrug beispielhaft 50 Hz.

Bei der Verwendung des Phasenanschnittes bei der Generierung des Wechselstroms I(ω) mittels beispielsweise eines Thyristors (Abbildung c von Fig. 2) ist jedoch eine deutliche Veränderung der Reflexionseigenschaften der Edelmetall-Grobkornkristalle zu erkennen, sodass auf eine chemische Reaktion, die stattgefunden hat, zurückzuschließen ist.

Figur 8 zeigt beispielhaft das Bild eines Oszillographen mit einer darauf angezeigten periodischen Spannungskurve U(ω) als Funktion der Zeit bei einer Grundfrequenz ω$_0$, wobei diese Spannungskurve eine starke Abweichung von einer Sinusform zeigt, welche im Wesentlichen durch eine Phasenanschnittsteuerung bewirkt ist, und die Form des hierbei verwendeten Wechselstroms I(ω) repräsentiert. Die Grundfrequenz ω$_0$ betrug beispielhaft 50 Hz. Hierbei ist eine beispielhafte durch eine Phasenanschnittsteuerung erzeugte, erste nicht-sinusförmige Halbwelle mit dem Intervall Hw$_1$ und eine zweite durch eine Phasenanschnittsteuerung erzeugte, nicht-sinusförmige Halbwelle mit dem Intervall Hw$_2$ markiert.

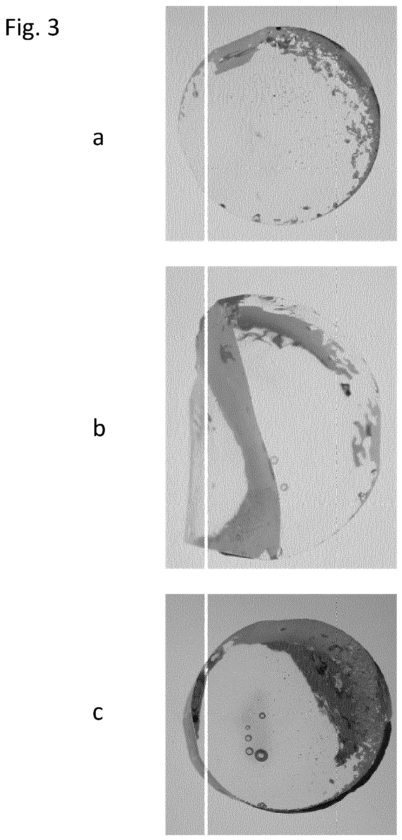

Im Anschluss nachdem der gesamte Tiegel 1 abgetempert wurde, wurde der Glaskörper der Tiegelhälfte, aus dem die entsprechende Elektrode zuvor entnommen wurde, ausgebohrt und der Boden poliert. Die Durchlicht-Aufnahmen der Proben sind in Fig. 3a bis 3c dargestellt.

Es ist deutlich zu erkennen, dass bei einer stromlosen Signalkurve (Abbildung a von Fig. 3) keine Blasen zu erkennen sind, und bei einer zumindest annähernd sinusartigen Signalkurve (Abbildung b von Fig. 3) nur sehr wenige Blasen entstanden sind.

Jedoch sind bei der Verwendung des Phasenanschnittes mittels eines Thyristors (Abbildung c von Fig. 3) nicht nur eine deutliche Blasenbildung zu beobachten, sondern auch eine Verdunklung des Glases um die gebildeten Blasen herum, was auf die Bildung von Edelmetallpartikeln zurückzuführen ist.

Die Erfinder haben bei ihren weiteren Verfahren die elektrochemische Impedanzspektroskopie verwendet, um Eigenschaften des jeweiligen verwendeten Glases detaillierter erkennen zu können.

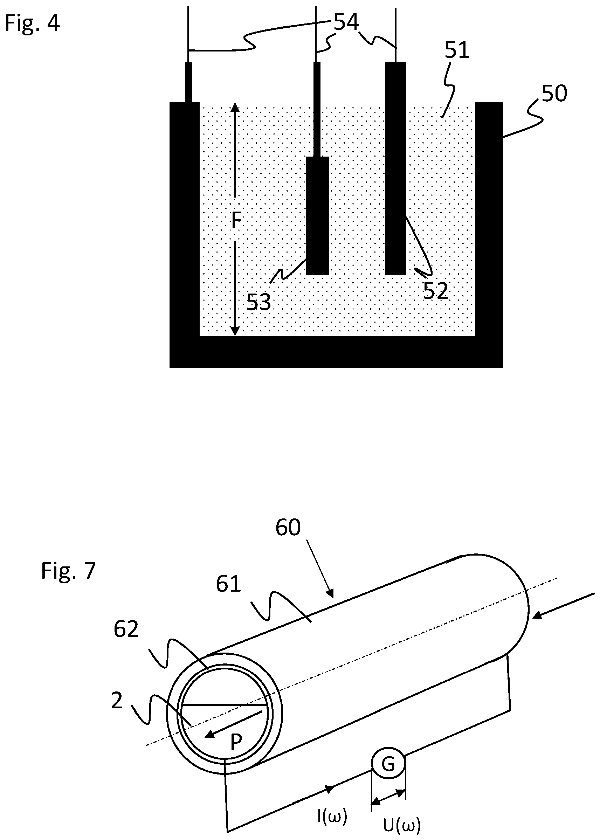

Ein schematischer Versuchsaufbau zur elektrochemischen Impedanzspektroskopie ist Fig. 4 zu entnehmen. Dabei wurde in einem Platin-Tiegel 50 mit etwa 10 cm Durchmesser Glas geschmolzen, wobei die Füllhöhe F der silikatischen Glasschmelze 51 etwa 10 cm betrug. Der Tiegel 51 wurde in einem Ofen auf Temperatur gehalten und die zu untersuchende Elektrode, hier eine Platin-Elektrode 53 mit einer Größe von etwa 2x4cm, rechteckig, in die Glasschmelze 51 eingeführt.

Sowohl der Tiegel 51 als auch die Elektroden 52, 53 sind jeweils durch einen Platin-Draht 54 elektrisch ansprechbar. Als weiteres wurde eine O2|Pt|ZrO2-Referenzelektrode 52 (welche mit 1bar O$_2$ als Referenz gespült wird) in die Glasschmelze 51 eingebracht, um ein unabhängiges Referenzpotential für die elektrochemischen Messungen zu haben.

Das elektrochemische Impedanzspektrometer wurde in der folgenden Konfiguration angeschlossen: Die Arbeitselektrode 53 bildet die Platin-Elektrode unter Test, die Referenzelektrode 52 ist die eingebrachte O$_2$|Pt|ZrO$_2$-Referenzelektrode, die Gegenelektrode bildet der Tiegel 51.

Die Impedanzspektren wurden mittels potentiostatischer elektrochemischer Impedanzspektroskopie aufgenommen und ein Anregungspotential von 25mV gewählt.

Damit wurden die folgenden Impedanzspektren aufgenommen von einer Glasschmelze 51 einer Zusammensetzung entsprechend dem Glas AS87 bei Frequenzen von $10^6$ Hz bis $5*10^{-3}$ Hz bei den Schmelztemperaturen 1200°C, 1300°C, 1400°C, 1500°C.

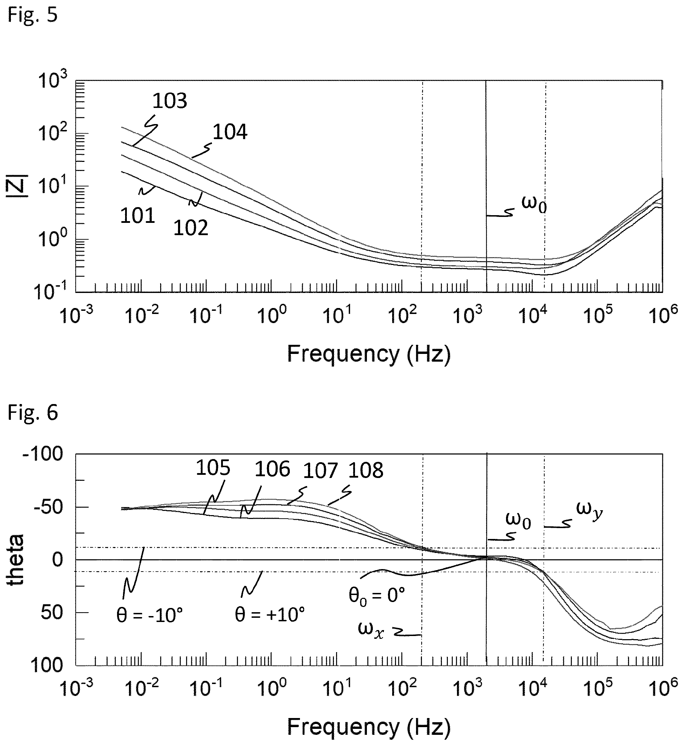

Lediglich beispielhaft wird der hierbei generierte Strom als I($\omega$) und die hierbei auftretende Spannung als U($\omega$) bezeichnet. Die komplexe Impedanz ergibt sich hierbei ebenfalls frequenzabhängig als Z($\omega$) = U($\omega$) / I($\omega$), deren Betrag |Z| für verschiedene Temperaturen in dem Impedanzspektrogramm der Figur 5 gezeigt ist.

Der hierbei frequenzabhängig dargestellte Phasenwinkel $\Theta(\omega)$ zwischen Strom I($\omega$) und der Spannung U($\omega$), welcher in Figur 6 mit "theta" bezeichnet ist, zeigte eine klare Frequenzabhängigkeit mit einem ausgeprägten Minimum, dessen verfahrensgemäße Verwendung nachfolgend noch detaillierter beschrieben werden wird.

Mit diesen Versuchen soll eine Anordnung, wie diese in Figur 7 dargestellt ist, simuliert werden und insbesondere die Wechselwirkung des Edelmetalls, insbesondere eines Edelmetall umfassenden Leitungssystems mit der silikatischen Schmelze untersucht werden.

Es hat sich in überraschender Weise gezeigt, dass die mit den in den Figuren 1 und 4 dargestellten Anordnungen erhaltenen Versuchsergebnisse auch auf andere Ausführungsformen im Wesentlichen übertragbar waren, wie beispielsweise auf die in Figur 7 dargestellte Ausführungsform, bei welcher im Wesentlichen kein Strom direkt durch die silikatische Schmelze oder Glasschmelze 2 geführt wird, sondern dieser im Wesentlichen in dem Edelmetall umfassenden Bereich, somit in der nachfolgend noch detaillierter beschriebenen Beschichtung oder Belegung 62 geführt wird. Obwohl dieser positive Effekt noch nicht vollständig verstanden zu sein scheint, kann ein Grund für die Übertragbarkeit der vorliegenden Ergebnisse im Skin-Effekt eines wechselfrequenten Stroms in einem Leiter liegen, bei welchem an der Oberfläche eines Leiters bei wechselfrequenten Strömen höhere Stromdichten als in dessen Innerem auftreten, da der Leiter versucht, in seinem Inneren feld- und spannungsfrei zu bleiben. Diese an der Oberfläche des jeweiligen Leiters auftretenden höheren Stromdichten stehen damit aber in direktem Kontakt mit der Glasschmelze 2, welche an den Leiter 62 angrenzt.

In Figur 7 ist ein im Wesentlichen rohrförmiges Leitungselement 60 eines Leitungssystems zum Transport einer Glasschmelze dargestellt. Dieses Leitungssystem kann sich beispielsweise zwischen einem Schmelzaggregat und einer Einrichtung zur Heißformung erstrecken.

Das Leitungselement 60 umfasst einen rohrförmigen Abschnitt 61 aus einem feuerfesten Refraktärmaterial auf und weist an dessen Innenseite eine zumindest ein Edelmetall umfassende Beschichtung 62 oder Belegung 62 mit Edelmetall auf.

Wie vorstehend erwähnt, kann dieses Edelmetall beispielsweise Platin oder Legierungen mit Platin umfassen. Beispielsweise kann Platin mit Rhodium, Iridium und Gold legiert sein und/oder zusätzlich Zirkoniumdioxid und/oder Yttriumoxid zur Feinkornstabilisierung umfassen Mittels des Generators G wird der Wechselstrom I($\omega$) durch das Edelmetall geführt und entsteht dabei am Generator die Wechselspannung U($\omega$), wie diese in den Figuren 8 und 9 dargestellt ist.

Hierbei wurde die Grundfrequenz $\omega_0$ basierend auf dem Phasenwinkel $\theta_0$ zwischen Strom und Spannung eingestellt.

Insbesondere wurde die Grundfrequenz $\omega_0$ so eingestellt, dass der Phasenwinkel $\theta_0$ zwischen Strom und Spannung als Funktion der Frequenz $\omega$ bei einem lokalen Minimum liegt, an welchem die lokale Ableitung des Phasenwinkels $\theta$ nach der Frequenz $\omega$ den Wert Null annimmt.

Ein derartiges Minimum ist beispielhaft der Darstellung aus Figur 6 für den Wert der Frequenz $\omega_0$ zu entnehmen.

Dieses lag je nach Verfahrensführung jedoch nicht scharf lokalisiert mit einem ausgeprägten Peak, sondern innerhalb eines Bereichs mit geringer Steigung vor, Vorteilhaft hat sich für die vorliegend offenbarten Ausführungsformen auch ein Winkelbereich mit dieser geringen Steigung erwiesen, bei bei welchem der Phasenwinkel $\theta_0$ zwischen Strom und Spannung kleiner als $\pm 10°$, ist, bevorzugt kleiner als $\pm$ 5° und besonders bevorzugt kleiner als $\pm$ 2° ist.

Generell lag bevorzugt die Grundfrequenz $\omega_0$, wie beispielsweise der Darstellung aus Figur 6 zu entnehmen ist, bei einem Phasenwinkel $\theta_0$ zwischen Strom und Spannung kleiner als $\pm 10°$ bei den vorliegend offenbarten Gläsern in einem Temperaturbereich von 1000 °C bis 1650 °C bei mindestens etwa $2 * 10^2$ Hz bis $5 * 10^2$ Hz bei einem einem Phasenwinkel $\theta_0$ zwischen Strom und Spannung von -10°, enstprechend $\omega_x$, und erstreckte sich bis höchstens etwa $1,5 * 10^4$ Hz bis $2 * 10^4$ Hz bei einem Phasenwinkel $\theta_0$ zwischen Strom und Spannung von +10°, entsprechend $\omega_y$.

Obwohl die in Figur 7 dargestellte Anordnung im Wesentlichen nur Ströme I($\omega$) aufweist, welche innerhalb der Glasschmelze 2 in Richtung des Pfeils P fließen, zeigt es sich, wie vorstehend bereits ausgeführt, dass die experimentell mit der in Figur 1 dargestellten Anordnung gewonnenen Ergebnisse auf das in Figur 7 dargestellte Leitungselement 60 überraschend gut übertragbar waren und durch das Verfahren mit minimiertem Phasenwinkel eine starke Verminderung sowohl der Blasenbildung als auch des partikulären Eintrags erreicht werden konnte.

In Fig. 5 und Figur 6 sind die Ergebnisse der Impedanzspektroskopie in zwei Diagrammen dargestellt. In Fig. 5 ist der Betrag der komplexen Impedanz Z als Funktion der Frequenz aufgetragen. Die Kurve 101 ist bei einer Schmelztemperatur von 1500°C gemessen, die Kurve 102 einer Schmelztemperatur von 1400°C, die Kurve 103 einer Schmelztemperatur von 1300°C und die Kurve 104 einer Schmelztemperatur von 1200°C.

Es ist deutlich erkennbar, dass der Betrag der Impedanz temperaturabhängig bei Frequenzen zwischen ca. mindestens etwa $2 * 10^2$ Hz bis $5 * 10^2$ Hz bis höchstens etwa $1,5 * 10^4$ Hz bis $2 * 10^4$ Hz ein Minimum durchläuft.

In Figur 6 ist der Phasenwinkel θ als Funktion der Frequenz aufgetragen. Die Kurve 105 wurde bei jeweils dem gleichen Glas bei einer Schmelztemperatur von 1500°C gemessen, die Kurve 106 bei einer Schmelztemperatur von 1400°C, die Kurve 107 bei einer Schmelztemperatur von 1300°C und die Kurve 108 bei einer Schmelztemperatur von 1200°C. Auch hier zeigt sich, dass bei diesen Temperaturen bei Frequenzen von mindestens $5 * 10^2$ Hz bis höchstens $2 * 10^4$ Hz der Phasenwinkel ein Minimum aufweist, also sehr geringe Werte zwischen höchstens ± 10°, beispielsweise höchstens ± 5° oder sogar nur höchstens ± 2°.

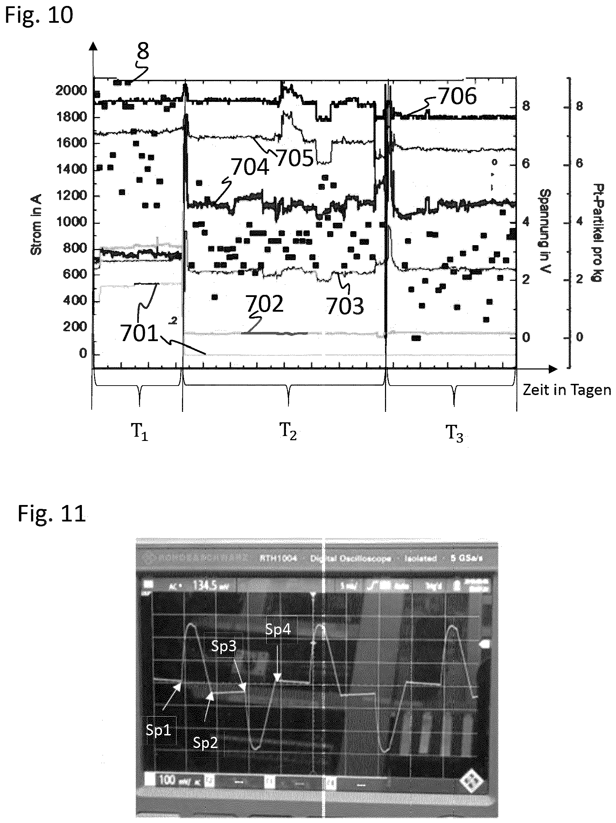

Die mit dem erfindungsgemäßen Verfahren erzielbaren Ergebnisse sind lediglich beispielhaft in Figur 10 dargestellt.

Figur 10 zeigt die Ergebnisse der Produktion eines alkalifreien Erdalkalisilikatglases, dessen beispielhafte Zusammensetzung bereits vorstehend angegeben wurde, an einer beispielhaften Vorrichtung zur Herstellung von Glasprodukten, welche abkürzend auch als Wanne bezeichnet wird.

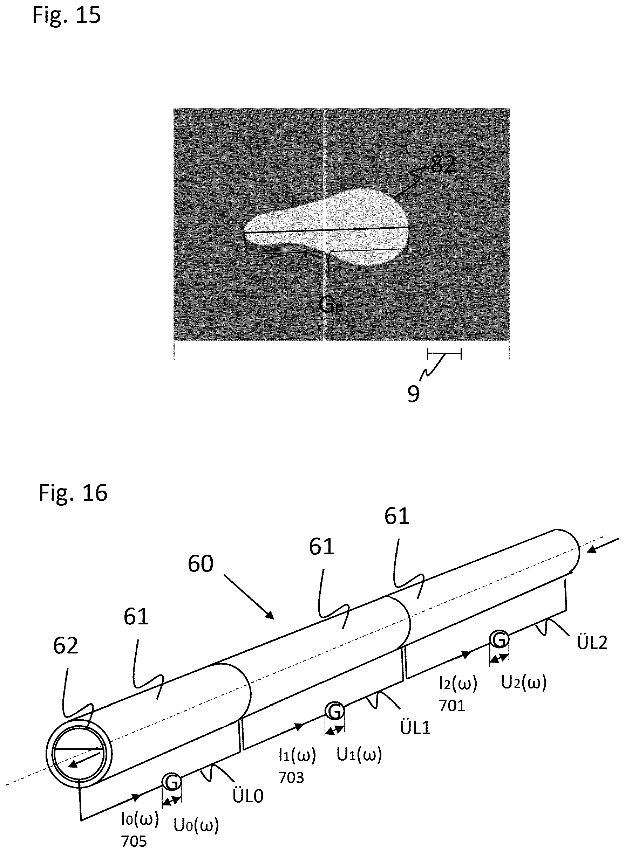

An dieser Wanne existiert zwischen einem Läuterrohr und einem Tiegel der Einrichtung, welche der Heißformung vorgeschaltet oder Teil von dieser ist, eine Verbindung mit einem Überführungsrohr, dem in Figur 7 und in einer weiteren Ausführungsform in Figur 16 dargestellten Leitungselement 60. Dieses Leitungselement 60 wurde ursprünglich über drei Heizkreise beheizt, welche als Überlauf 0 (ÜL0), Überlauf 1 (ÜL1), Überlauf 2 (ÜL2) bezeichnet werden. Figur 16 zeigt zwar beispielhaft hintereinander angeordnete Heizkreise des Überlaufs 0 (ÜL0), Überlaufs 1 (ÜL1) und Überlaufs 2 (ÜL2), diese können jedoch auch jeweils parallel an der in Figur 7 dargestellten Ausführungsform angeordnet sein.

Dabei wurden zunächst alle 3 Heizkreise über Transformatoren mit einer Anzapfung von 10 V betrieben, wie dieses im Wesentlichen der Darstellung in Figur 7 entspricht, wobei in Figur 7 beispielhaft und um der Klarheit Willen jedoch nur ein Heizkreis dargestellt ist, welcher mittels des Generators G die Spannung U(ω) und den Strom I(ω) bereit stellt. Detaillierter ist dieser Sachverhalt nochmals in Figur 16 gezeigt.

Die Heizkreise sind in ihrer Wirkung dargestellt über die entsprechenden Messkurven 701, 703, 705 des Stroms, wobei die Messkurve 701 dem Überlauf 2 zugeordnet ist, Messkurve 703 dem Überlauf 1 und Messkurve 705 dem Überlauf 0, sowie die Messkurven 702, 704, 706 für das Elektrodenpotential E (aufgetragen als Spannung U), wobei die Messkurve 702 dem Überlauf 2 zugeordnet ist, Messkurve 704 dem Überlauf 1 und Messkurve 706 dem Überlauf 0.

Weiterhin beispielhaft ist die Zahl 8 der Edelmetall umfassenden Partikel, die in diesem Zeitraum in die Glasschmelze eingetragen wurden, aufgetragen, und zwar in Form quadratischer Symbole, welche der besseren Übersichtlichkeit halber nicht alle bezeichnet sind.

Nun lassen sich 3 unterschiedliche Zustände beschreiben:

Zeitraum $T_1$, welcher etwa sechseinhalb Tage betrug.

Alle drei Heizkreise wurden über einen Transformator mit einer Anzapfung von 10 V betrieben.

Der Heizkreis ÜL0 wurde mit einer Spannung mit einem Effektivwert von ca. 8.2 V, mit einem Strom mit einem Effektivwert von ca. 1700 A und einem Phasenanschnitt betrieben, welcher relativ gering war, jedoch dennoch Oberwellen mit Frequenzen oberhalb von $\omega_y$ erzeugte.

Der Heizkreis ÜL1 wurde mit einer Spannung mit einem Effektivwert von ca. 2.9 V mit einem Strom mit einem Effektivwert von ca. 700 A und einem starken Phasenanschnitt betrieben. Der Heizkreis ÜL2 wurde mit einer Spannung mit einem Effektivwert von ca. 3.1 V, mit einem Strom mit einem Effektivwert von ca. 500 A und einem starken Phasenanschnitt betrieben, welches jeweils Oberwellen mit Frequenzen oberhalb von $\omega_y$ erzeugte.

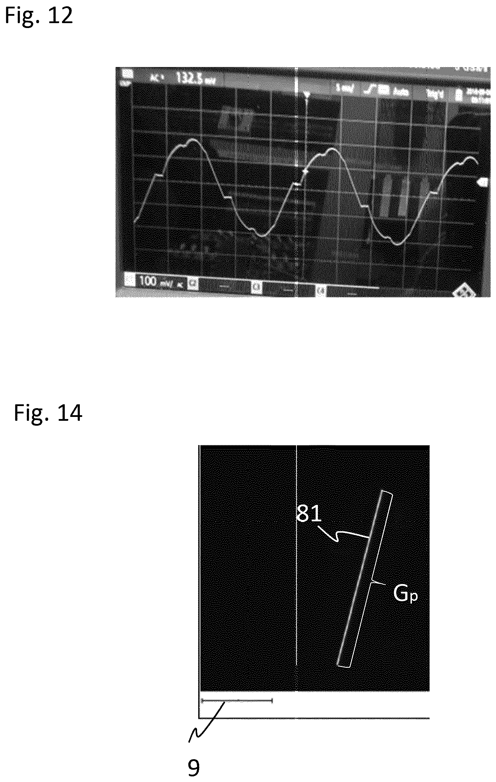

In Fig. 12 ist ein Bild eines Oszillographen mit einer darauf gezeigten Spannungskurve für den Überlauf 1 im Zeitraum T3 zu sehen. Der Phasenanschnitt ist hier relativ gering ausgeprägt.

In Fig. 11 ist ein Bild eines Oszillographen mit einer darauf gezeigten Spannungskurve für den Überlauf 1 im Zeitraum T1 zu sehen. Der Phasenanschnitt ist hier stark ausgeprägt und weist somit einen hohen Anteil von Frequenzen oberhalb von $\omega_y$ auf. Diese Frequenzen entstehen jeweils innerhalb einer Vollwelle von U(ω) an den in Fig. 11 gut zu erkennenden und stark ausgeprägten Spannunssprüngen Sp1, Sp2, Sp3 und Sp4. Es hat sich auch gezeigt, dass die Überschreitung der als bevorzugt angegebenen Frequenzen, somit von $\omega_y$ schädlichere Auswirkungen hatte als deren Unterschreitung.

Bei der vorstehenden Verfahrensführung betrug die Anzahl der in die Glasschmelze 2 eingetragenen Edelmetall-, insbesondere Platin-Partikel, im Mittel: ca. 7,0 Partikel pro kg.

Zeitraum $T_2$, welcher etwa 15 Tage betrug und sich an den Zeitraum $T_1$ anschloss.

Der Heizkreis ÜL1 und der Heizkreis ÜL2 wurden zusammengelegt, wodurch sich ein neuer Heizkreis (ÜL1) ergab.

Beide Heizkreise wurden über einen Transformator mit einer Anzapfung mit einem Effektivwert der Spannung von 10 V betrieben.

Der Heizkreis ÜL0 wurde mit einer Spannung mit einem Effektivwert von ca. 8.2 V, mit einem Strom mit einem Effektivwert von ca. 1650 A und einem Phasenanschnitt, der relativ gering war betrieben.

Der Heizkreis ÜL1 wurde mit einer Spannung mit einem Effektivwert von ca. 4.7 V, mit einem Strom mit einem Effektivwert von ca. 640 A und einemgegenüber der Darstellung in Figur 11 verringertem Phasenanschnitt betrieben.

Bei dieser unmittelbar vorstehend beschriebenen Verfahrensführung betrug die Anzahl der in die Glasschmelze 2 eingetragenen Edelmetall-, insbesondere Platin-Partikel, im Mittel: ca. 3,8 Partikel pro kg.

Der Zeitraum $T_3$, welcher etwa neuneinhalb Tage betrug, schloss sich an den Zeitraum $T_2$ an. Der Heizkreis ÜL0 wurde über Stelltrafo mit einer Anzapfung mit einer Spannung mit einem Effektivwert von 8 V betrieben.

Der Heizkreis ÜL1 wurde über einen Trafo mit einer Anzapfung mit einer Spannung mit einem Effektivwert von 10 V betrieben.

Der Heizkreis ÜL0 wurde mit einer Spannung mit einem Effektivwert von ca. 7.6 V, mit einem Strom mit einem Effektivwert von ca. 1550 A und einem Phasenanschnitt, welcher bestmöglich optimiert, dies bedeutet geglättet war, betrieben.

Der Überlauf ÜL1 wurde mit einer Spannung mit einem Effektivwert von ca. 4.7 V, mit einem Strom mit einem Effektivwert von ca. 640 A und einem Phasenanschnitt, welcher gegenüber der Darstellung in Figur 11 verringert war, betrieben.

Dass die Effektivwerte der Spannung im vorstehend beschriebenen Betrieb während der Zeiträume $T_1$ bis $T_3$ niedriger waren als die Effektivwerte der Spannung der Anzapfung, stellt den Normalfall eines strombelasteten Transformators dar, welcher mit zunehmender Höhe des Effektivwertes des Stroms einen Abfall des Effektivwertes der Spannung zeigen kann.

In Fig. 12 ist ein Bild eines Oszillographen mit einer darauf gezeigten Spannungskurve für den Überlauf 1 im Zeitraum $T_3$ zu sehen. Wie ersichtlich ist, ist der Phasenanschnitt hier im Vergleich zu der in Fig. 11 gezeigten Spannungskurve deutlich verringert, wie dies bereits vorstehend für Spannungskurven mit verringertem Phasenanschnitt erwähnt wurde.

Bei dieser unmittelbar vorstehend beschriebenen Verfahrensführung betrug die Anzahl der in die Glasschmelze 2 eingetragenen Edelmetall-, insbesondere Platin-Partikel im Mittel: ca. 2,5 Partikel pro kg.

Diese Beispiele zeigen, dass ein verringerter Einfluss des Phasenanschnitts und ein stärker sinusförmiger Wechselstrom $I(\omega)$ zu einer Minimierung des partikulären Eintrags in die Schmelze 2 führt.

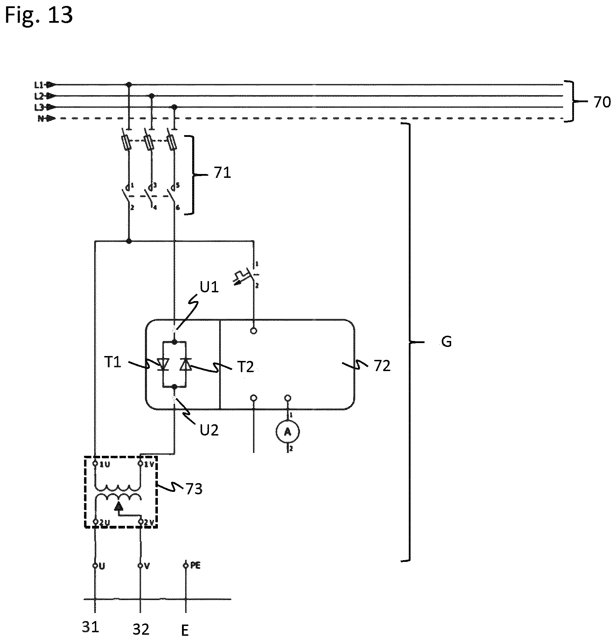

Fig. 13 zeigt ein stark vereinfachtes Prinzipschaltbild einer beispielhaften Schaltungsanordnung. Die Leitungen L1, L2, L3 und N sind Leitungen, welche insbesondere die Phasen eines Versorgungsnetzes 70 führen, das entweder Teil eines internen oder eines externen Versorgungsnetzwerks sein kann. Dieses Versorgungsnetz 70 kann beispielsweise eine Wechselspannung mit einer Effektivspannung von 230 V zwischen jeweils zwei Leitungen mit den Phasen L1, L2, L3 mit einer Netzfrequenz von 50 Hz oder auch höher bei einem internen Versorgungsnetzwerk bereitstellen. Bereits mit dieser Anordnung, bei welcher die Grundfrequenz $\omega_0$ noch nicht optimal gewählt wurde, konnte gezeigt werden, dass die Vermeidung von Oberwellen mit Frequenzen $\omega$, welche außerhalb, insbesondere oberhalb des bevorzugten Frequenzbereichs liegen, einen positiven Einfluss im Sinne der gestellten Aufgabe zeigte.

Mittels eines mit Sicherungen versehenen Schützes oder Schaltschutzes 71 werden die Leitungen mit den Phasen L1 und L3 der weiteren, nachfolgend noch detaillierter beschriebenen Schaltung zugeführt.

Bei geschlossenem Schütz 71 wird die Phase L3 einer Parallelschaltung umfassend die Thyristoren T1 und T2 zugeführt, wobei die Thyristoren T1 und T2 durch eine Ansteuerungsschaltung 72 definiert angesteuert, insbesondere jeweils gezündet werden.

Der Thyristor T1 und T2 sitzt dabei üblicherweise jeweils zwischen den mit U1 und U2 bezeichneten Potentialen, um den Phasenanschnitt zu erzeugen und zusammen mit der Phase L3, welche den Phasenanschnitt aufweist und der Phase L1 den Stelltransformator 73 zu speisen.

Der Stelltransformator 73 ist dazu eingerichtet, den durch die Thyristoren T1 und T2 erzeugte Spannung mit dem Phasenanschnitt auf eine definierte Niederspannung zu transformieren.

Der Einsatz eines solchen Stelltransformators 73 ist darüber hinaus auch eine zweckmäßige Möglichkeit, um den durch die Thyristoren T1 und T2 erzeugten Phasenanschnitt wieder zu vergleichmäßigen, dies bedeutet zu glätten.

Der Stelltransformator 73 liefert an seinen Anschlüssen U und V die vorstehend beschriebenen Spannungen und Ströme für die ebenfalls vorstehend beschriebenen Elektroden 31 und 32. Der mit PE bezeichnete Anschluss kann ein Erdpotential E zur Erdung entsprechender Baugruppen, beispielsweise des Leitungselements oder Leitungssystems, welches auch als Rinne bezeichnet ist, umfassen.

Mit dem internen oder externen Versorgungsnetzwerk 70, dem mit Sicherungen versehenen Schütz oder Schaltschütz 71, der Ansteuerungsschaltung 72 sowie den Thyristoren T1 und T2 sowie dem Stelltransformator 73 wird im Wesentlichen der vorstehend erwähnte Generator G bereitgestellt.

Wenn das Versorgungsnetzwerk 70 als internes Versorgungsnetzwerk ausgebildet ist, kann dieses anstatt der beispielhaft mit 220 V angegebenen Effektivspannung und der beispielhaft angegebenen Wechselspannung mit einer Grundfrequenz $w_0$ von 50 Hz oder auch mit anderen Effektivspannungen und anderen Grundfrequenzen $\omega_0$ betrieben werden.

Diese Grundfrequenzen $\omega_0$ können dann beispielsweise insbesondere bei einem internen Versorgungsnetzwerk den in den Figuren 5 und 6 dargestellten Frequenzen entsprechen.

Fig. 14 zeigt eine Rasterelektronenmikroskopaufnahme eines beispielhaften nadelförmigen, zumindest ein Edelmetall umfassenden Partikels, welche auch als Edelmetall-umfassende Nadel bezeichnet werden kann. Diese Nadel hat hier eine maximale laterale Abmessung von ca. 100 $\mu$m, und somit eine Größe Gp im Sinne der vorliegenden Offenbarung von ca. 100 $\mu$m, wobei das Aspektverhältnis solcher Nadeln typischerweise 100 beträgt. Dies bedeutet, dass die Nadel bei ca. 100 $\mu$m Länge eine Breite und Tiefe von lediglich ca. 1 $\mu$m aufweist. Der im unteren Bereich von Fig. 14 abgebildete Maßstab 9 steht für eine Länge von 60 $\mu$m.

Fig. 15 zeigt eine weitere Rasterelektronenmikroskopaufnahme eines beispielhaften zumindest ein Edelmetall umfassenden Partikels mit einer Größe Gp im Sinne der vorliegenden Offenbarung von etwa 32 $\mu$m, welcher im Vergleich zur Nadel der Fig. 14 ein deutlich geringes Aspektverhältnis aufweist. Trotz der Abweichung der Partikelform von einer idealen Kreis- oder Kugelform werden solche Partikel noch als kugelig bezeichnet. Der im unteren Bereich von Fig. 15 abgebildete Maßstab steht für eine Länge von 10 $\mu$m.

Bezugszeichenliste

| | |
|---|---|
| 1 | Tiegel |
| 2 | Glasschmelze |
| 8 | Zahl von Edelmetall umfassenden Partikeln |
| 9 | Maßstab |
| 31, 32 | Elektroden |
| 41, 42 | Ableiter |
| 50 | Edelmetall umfassender Tiegel |
| 51 | Glasschmelze |
| 52 | Referenzelektrode |
| 53 | Arbeitselektrode |
| 54 | Ableiter |
| 60 | Leitungselement als Teil eines Leitungssytems |
| 61 | rohrförmigen Abschnitt aus einem feuerfesten Refraktärmaterial von 60 |
| 62 | zumindest ein Edelmetall umfassende Beschichtung oder Belegung des Leitungselements 60 |
| 70 | internes oder externes Versorgungsnetzwerk, beispielhaft mit 220 V Effektivspannung und einer beispielhaften Grundfrequenz $\omega_0$ der Wechselspannung von 50 Hz |
| 71 | mit Sicherungen versehenes Schütz oder Schaltschütz |
| 72 | Ansteuerungsschaltung der Thyristoren T1 und T2 |
| 73 | Stelltransformator |
| 81 | als Nadel ausgebildeter Edelmetall umfassender Partikel |
| 82 | kugelig ausgebildeter Edelmetall umfassender Partikel |
| 101, 105 | Messkurven bei 1500°C Schmelztemperatur |
| 102, 106 | Messkurven bei 1400°C Schmelztemperatur |
| 103, 107 | Messkurven bei 1300°C Schmelztemperatur |
| 104, 108 | Messkurven bei 1200°C Schmelztemperatur |
| 701, 703, 705 | Messkurven des Stroms |
| 702, 704, 706 | Messkurven des Elektrodenpotentials |
| F | Füllhöhe des Glases während der Impedanzmessung |
| G | Generator |
| $G_p$ | Größe des Edelmetall umfassenden Partikels |
| P | Richtung der Ströme I($\omega$) innerhalb der Glasschmelze 2 |
| Sp1 | Spannungssprung innerhalb einer Vollwelle von U($\omega$) |
| Sp2 | Spannungssprung innerhalb einer Vollwelle von U($\omega$) |
| Sp3 | Spannungssprung innerhalb einer Vollwelle von U($\omega$) |
| Sp4 | Spannungssprung innerhalb einer Vollwelle von U($\omega$) |
| T1 | Thyristor |
| T2 | Thyristor |
| U1 | erstes Potential, an welchem die Thyristoren T1 und T2 anliegen |
| U2 | zweites Potential, an welchem die Thyristoren T1 und T2 anliegen |
| U | Anschluss des Stelltransformators an die Elektrode 31 |
| ÜL0 | Heizkreis des Überlaufs 0 |
| ÜL1 | Heizkreis des Überlaufs 1 |
| ÜL2 | Heizkreis des Überlaufs 2 |
| V | Anschluss des Stelltransformators an die Elektrode 32 |

| PE | Anschluss mit Erdpotential |
|---|---|
| E | Erdpotential zur Erdung entsprechender Baugruppen, beispielsweise des Leitungselements oder Leitungssystems, welches auch als Rinne bezeichnet ist |
| $Vw_1$ | Vollwelle eines im Wesentlichen sinusförmigen Stroms $I(\omega)$ |
| $Hw_1$ | erste Halbwelle eines im Wesentlichen nicht-sinusförmigen Stroms $I(\omega)$ |
| $Hw_2$ | zweite Halbwelle eines im Wesentlichen nicht-sinusförmigen Stroms $I(\omega)$ |

**Patentansprüche**

1. Verfahren zum Herstellen eines Glasprodukts, vorzugsweise eines scheibenförmigen Glasprodukts, wobei eine silikatische Glasschmelze durch ein Edelmetall umfassendes Leitungssystem von einem Bereich eines Aggregats zum Herstellen eines Glasprodukts in einen anderen Bereich des Aggregats zum Herstellen eines Glasprodukts überführt wird und wobei das Edelmetall umfassende Leitungssystem stromführend in der Form ist,

dass durch einen durch das Edelmetall geführten elektrischen Strom Joulesche Wärme in dem Edelmetall umfassenden Leitungssystem, insbesondere dem Edelmetall, erzeugt wird,
**dadurch gekennzeichnet, dass** bei der Grundfrequenz $\omega_0$ der Phasenwinkel $\theta_0$ zwischen Strom und Spannung, vorzugsweise zumindest einmal, gemessen wird bei welchem die Grundfrequenz $\omega_0$ basierend auf dem Phasenwinkel $\theta_0$ zwischen Strom und Spannung eingestellt wird,
wobei der Phasenwinkel $\theta_0$ zwischen Strom und Spannung kleiner als $\pm 10°$, ist, bevorzugt kleiner als $\pm\ 5°$ und besonders bevorzugt kleiner als $\pm\ 2°$ ist.

2. Verfahren zum Herstellen eines Glasprodukts nach vorstehendem Anspruch, bei welchem die Grundfrequenz $\omega_0$ so eingestellt wird, dass der Phasenwinkel $\theta_0$ zwischen Strom und Spannung als Funktion der Frequenz bei einem lokalen Minimum liegt, an welchem die lokale Ableitung des Phasenwinkels $\theta$ nach der Frequenz $\omega$ den Wert Null annimmt.

3. Verfahren zum Herstellen eines Glasprodukts nach einem der vorstehenden Ansprüche, bei welchem der zeitabhängige Verlauf der Spannungskurve $U(\omega)$, welche den Wechselstrom $I(\omega)$ erzeugt, Signalanteile mit mehr als einer diskreten Frequenz $\omega$ aufweist, somit vorzugsweise die diskreten Frequenzen $\omega_1, \omega_2, \omega_3, ...$ bis $\omega_n$ aufweist, wobei n eine natürliche Zahl ungleich Null ist, und wobei sich deren insgesamte aus der Überlagerung der einzelnen Signalanteile ergebende Spannungskurve $U(\omega)$ wie folgt ergibt:

$$U(\omega) = U_1(\omega_1) + U_2(\omega_2) + U_3(\omega_3) + ... U_n(\omega_n),$$

wobei $U_1(\omega_1), U_2(\omega_2), U_3(\omega_3) ... U_n(\omega_n)$ jeweils ein Spannungssignal mit einer sinus- oder cosinusförmigen Gestalt mit der jeweiligen Frequenz $\omega_1, \omega_2, \omega_3, ... \omega_n$ ist,
wobei vorzugsweise für jeden der diskreten Frequenzanteile mit $\omega_1, \omega_2, \omega_3, ...$ bis $\omega_n$ die Bedingung erfüllt ist, dass für jeden dieser Frequenzanteile mit $\omega_1, \omega_2, \omega_3, ...$ bis $\omega_n$ jeweils gilt, dass der Phasenwinkel zwischen Strom und Spannung bei der jeweiligen Frequenz $\theta_1(\omega_1), \theta_2(\omega_2), \theta_3(\omega_3), ...$ bis $\theta_n(\omega_n)$ kleiner als $\pm 10°$ ist, bevorzugt kleiner als $\pm\ 5°$ und besonders bevorzugt kleiner als $\pm\ 2°$ ist.

4. Verfahren zum Herstellen eines Glasprodukts nach einem der vorstehenden Ansprüche, bei welchem der zeitabhängige Verlauf der Spannungskurve $U(\omega)$, welche den Wechselstrom $I(\omega)$ erzeugt, Signalanteile mit einem kontinuierlichen Spektrum von sinus- oder cosinusförmigen Signalanteilen $Ui(\omega_i)$ mit verschiedenen Frequenzen $\omega_i$ aus dem Spektralbereich oder Frequenzintervall von $\omega x$ bis $\omega_y$ aufweist, wobei für die Frequenz $\omega_i$ eines jeden dieser Signalanteile gilt:

$$\omega_x < \omega_i < \omega_y$$

wobei $\omega_x$ diejenige Frequenz darstellt, bei welcher ein Phasenwinkel $\theta$ zwischen Strom und Spannung von -10° vorliegt, und $\omega_y$ diejenige Frequenz darstellt, bei welcher ein Phasenwinkel $\theta$ zwischen Strom und Spannung von +10° vorliegt.

5. Verfahren nach einem der vorstehenden Ansprüche von , bei welchem die Grundfrequenz $\omega_0$ mindestens $2 * 10^2$ Hz, vorzugsweise $5 * 10^2$ Hz bis höchstens $2 * 10^4$ vorzugsweise $1,5 * 10^4$ Hz Hz beträgt.

**6.** Verfahren zum Herstellen eines Glasprodukts nach einem der vorstehenden Ansprüche, bei welchem der Strom ein Wechselstrom $I(\omega)$ ist, bei welchem das zeitliche Integral über eine positive und eine negative Halbwelle im Wesentlichen den Wert Null ergibt.

**7.** Verfahren zum Herstellen eines Glasprodukts nach Anspruch 6, bei welchem das Leitungssystem ein im Wesentlichen rohrförmiges Leitungselement aufweist, welches an dessen Innenseite eine Edelmetall umfassende Beschichtung aufweist und bei welchem der Wechselstrom im Wesentlichen in Längsrichtung des rohrförmigen Leitungselements geführt ist.

**8.** Verfahren zum Herstellen eines Glasprodukts nach Anspruch 6 oder 7, bei welchem der Wechselstrom $I(\omega)$ im Wesentlichen sinusförmig ist und eine Grundfrequenz $\omega_0$ aufweist.

**9.** Verfahren zum Herstellen eines Glasprodukts nach Anspruch 6, 7 oder 8, bei welchem die Abweichung des zeitlichen Integrals des Wechselstromsignals über eine Vollwelle von dem zeitlichen Integral einer idealen sinusförmigen Pulssignalkurve weniger als 10%, vorzugsweise weniger als 5 % und besonders bevorzugt weniger als 2 % beträgt.

**10.** Verfahren nach einem der vorstehenden Ansprüche, bei welchem die Temperatur der Glasschmelze zwischen 1000°C und 1650°C liegt.

**Claims**

**1.** A method for making a glass product, preferably a sheet-like glass product,

wherein a silicate glass melt is transferred through a precious metal-comprising conveyance system from one area of an aggregate for making a glass product to another area of the aggregate for making a glass product, and wherein the precious metal-comprising conveyance system is current-carrying in a way so that an electric current passed through the precious metal generates Joule heating in said precious metal-comprising conveyance system, in particular in the precious metal,
**characterized in that** at the fundamental frequency $\omega_0$, the phase angle $\theta_0$ between current and voltage is measured, preferably at least once,
wherein the fundamental frequency $\omega_0$ is adjusted based on the phase angle $\theta_0$ between current and voltage, wherein the phase angle $\theta_0$ between current and voltage is less than $\pm\ 10°$, preferably less than $\pm\ 5°$, and most preferably less than $\pm\ 2°$.

**2.** The method for making a glass product according to the preceding claim, wherein the fundamental frequency $\omega_0$ is adjusted such that the phase angle $\theta_0$ between current and voltage, as a function of frequency, is at a local minimum where the local derivative of the phase angle $\theta_0$ with respect to frequency $\omega$ assumes the value zero.

**3.** The method for making a glass product according to any one of the preceding claims, wherein the time-dependent course of the voltage curve $U(\omega)$ that generates the alternating current $I(\omega)$ comprises signal components having more than one discrete frequency $\omega$, thus preferably comprising the discrete frequencies $\omega_1$, $\omega_2$, $\omega_3$, ... up to $\omega_n$, where n is a non-zero natural number, and wherein the total voltage curve $U(\omega)$ resulting from the superposition of the individual signal components is obtained as follows:

$$U(\omega) = U_1(\omega_1) + U_2(\omega_2) + U_3(\omega_3) + ...\ U_n(\omega_n),$$

where each of $U_1(\omega_1)$, $U_2(\omega_2)$, $U_3(\omega_3)$ ... $U_n(\omega_n)$ is a voltage signal having a sinusoidal or cosinusoidal waveform with the respective frequency $\omega_1$, $\omega_2$, $\omega_3$, ... $\omega_n$,
wherein, preferably, for each of the discrete frequency components with $\omega_1$, $\omega_2$, $\omega_3$, ... up to $\omega_n$, the condition is satisfied that for each of these frequency components with $\omega_1$, $\omega_2$, $\omega_3$, ... up to $\omega_n$ the phase angle between current and voltage at the respective frequency, $\theta_1(\omega_1)$, $\theta_2(\omega_2)$, $\theta_3(\omega_3)$, ... up to $\theta_n(\omega_n)$, is less than $\pm 10°$, preferably less than $\pm 5°$ and particularly preferably less than $\pm 2°$.

**4.** The method for making a glass product according to any one of the preceding claims, wherein the time-dependent course of the voltage waveform $U(\omega)$ that generates the alternating current $I(\omega)$ comprises signal components having a continuous spectrum of sinusoidal or cosinusoidal signal components $U_i(\omega_i)$ with different frequencies $\omega_i$ from the

spectral range or frequency interval from $\omega_x$ to $\omega_y$, wherein, for the frequency $\omega_i$ of each of these signal components, the following applies:

$$\omega_x < \omega_i < \omega_y$$

wherein $\omega_x$ represents the frequency at which a phase angle $\theta$ between current and voltage is -10°, and $\omega_y$ represents the frequency at which a phase angle $\theta$ between current and voltage is +10°.

5. The method according to any one of the preceding claims, wherein the fundamental frequency $\omega_0$ is at least $2 * 10^2$ Hz, preferably $5 * 10^2$ Hz, up to at most $2 * 10^4$, preferably $1.5 * 10^4$ Hz.

6. The method for making a glass product according to any one of the preceding claims, wherein the current is an alternating current $I(\omega)$ in which the time integral over a positive and a negative half-wave essentially yields the value zero.

7. The method for making a glass product according to claim 6, wherein the conveyance system comprises a substantially tubular conduit element which has a precious metal-comprising coating on its inner surface, and wherein the alternating current is carried substantially longitudinally of the tubular conduit element.

8. The method for making a glass product according to claim 6 or 7, wherein the alternating current $I(\omega)$ is substantially sinusoidal and has a fundamental frequency $\omega_0$.

9. The method for making a glass product according to claim 6, 7 or 8, wherein the time integral of the alternating current signal over a full wave deviates from the time integral of an ideal sinusoidal pulse signal waveform by less than 10 %, preferably less than 5 %, and particularly preferably less than 2 %.

10. The method according to any one of the preceding claims, wherein the temperature of the glass melt is between 1000 °C and 1650 °C.

**Revendications**

1. Procédé de fabrication d'un produit en verre, de préférence un produit en verre en forme de disque, où du verre silicaté en fusion est transféré à travers un système de conduites, comportant un métal précieux, d'une zone d'un équipement de fabrication d'un produit en verre dans une autre zone de l'équipement de fabrication d'un produit en verre, et où le système de conduites comportant un métal précieux est conducteur du courant, de manière à ce

qu'un courant électrique guidé par le métal précieux produise de la chaleur par effet Joule dans le système de conduites comportant un métal précieux, en particulier dans le métal précieux,
**caractérisé en ce qu'**en présence de la fréquence de base $\omega_0$, on mesure, de préférence au moins une fois, l'angle de phase $\theta_0$ entre le courant et la tension, pour lequel la fréquence de base $\omega_0$ est réglée sur la base de l'angle de phase $\theta_0$ entre le courant et la tension,
l'angle de phase $\theta_0$ entre le courant et la tension étant inférieur à +10°, de préférence inférieur à $\pm 5°$, et de manière particulièrement avantageuse inférieur à $\pm 2°$.

2. Procédé de fabrication d'un produit en verre selon la revendication précédente, selon lequel la fréquence de base $\omega_0$ est réglée de manière à ce que l'angle de phase $\theta_0$ entre le courant et la tension, en tant que fonction de la fréquence, se situe à un minimum local avec lequel la dérivée locale de l'angle de phase $\theta_0$ en fonction de la fréquence $\omega$ adopte la valeur zéro.

3. Procédé de fabrication d'un produit en verre selon une des revendications précédentes, selon lequel la variation en fonction du temps de la courbe de tension $U(\omega)$ générant le courant alternatif $I(\omega)$ présente des composantes de signal avec plus d'une fréquence $\omega$ discrète, et présente par conséquent les fréquences discrètes $\omega_1, \omega_2, \omega_3, ...$ à $\omega_n$, n étant un nombre naturel non nul, et où leur courbe de tension $U(\omega)$ globale, résultant de la superposition des différentes composantes de signal, se calcule comme suit :

$$U(\omega) = U_1(\omega_1) + U_2(\omega_2) + U_3(\omega_3) + ... U_n(\omega_n),$$

**EP 3 932 875 B1**

$U_1(\omega_1)$, $U_2(\omega_2)$, $U_3(\omega_3)$ ... $U_n(\omega_n)$ étant respectivement un signal de tension de forme sinusoïdale ou cosinusoïdale avec la fréquence $\omega_1$, $\omega_2$, $\omega_3$ ... $\omega_n$ respective,

sachant que de préférence pour chacune des composantes de fréquence discrètes avec $\omega_1$, $\omega_2$, $\omega_3$ ... à $\omega_n$, la condition est remplie selon laquelle, pour chacune de ces composantes de fréquence avec $\omega_1$, $\omega_2$, $\omega_3$ ... à $\omega_n$, il est défini que l'angle de phase entre le courant et la tension, pour la fréquence $\theta_1(\omega_1)$, $\theta_2(\omega_2)$, $\theta_3(\omega_3)$ ... à $\theta_n(\omega_n)$ respective, est inférieur à +10°, de préférence inférieur à +5°, et de manière particulièrement avantageuse inférieur à ±2°.

4. Procédé de fabrication d'un produit en verre selon une des revendications précédentes, selon lequel la variation en fonction du temps de la courbe de tension $U(\omega)$, générant le courant alternatif $I(\omega)$, présente des composantes de signal avec un spectre continu de composantes de signal $Ui(\omega_i)$ sinusoïdales ou cosinusoïdales avec des fréquences $\omega_i$ différentes du domaine spectral ou de l'intervalle de fréquences allant de $\omega_x$ à $\omega_y$, la fréquence $\omega_i$ de chacune de ces composantes de signal étant définie par :

$$\omega_x < \omega_i < \omega_y$$

$\omega_x$ représentant la fréquence à laquelle un angle de phase $\theta_0$ entre le courant et la tension est de -10°, et $\omega_y$ représentant la fréquence à laquelle un angle de phase $\theta_0$ entre le courant et la tension est de +10°.

5. Procédé selon une des revendications précédentes, selon lequel la fréquence de base $\omega_0$ est d'au moins $2 * 10^2$ Hz, de préférence de $5 * 10^2$ Hz jusqu'à au maximum $2 * 10^4$, de préférence $1,5 * 10^4$ Hz Hz.

6. Procédé de fabrication d'un produit en verre selon une des revendications précédentes, selon lequel le courant est un courant alternatif $I(\omega)$ avec lequel l'intégrale temporelle sur une demi-onde positive et une demi-onde négative donne sensiblement la valeur zéro.

7. Procédé de fabrication d'un produit en verre selon la revendication 6, selon lequel le système de conduites comporte un élément de conduite sensiblement tubulaire qui présente sur sa face interne un revêtement comportant un métal précieux, et selon lequel le courant alternatif est guidé essentiellement dans le sens longitudinal de l'élément de conduite tubulaire.

8. Procédé de fabrication d'un produit en verre selon la revendication 6 ou 7, selon lequel le courant alternatif $I(\omega)$ est sensiblement sinusoïdal et présente une fréquence de base $\omega_0$.

9. Procédé de fabrication d'un produit en verre selon la revendication 6, 7 ou 8, selon lequel l'écart de l'intégrale temporelle du signal de courant alternatif sur une onde pleine par rapport à l'intégrale temporelle d'une courbe sinusoïdale idéale de signal d'impulsion est inférieur à 10 %, de préférence inférieur à 5 % et de manière particulièrement avantageuse inférieur à 2 %.

10. Procédé selon une des revendications précédentes, selon lequel la température du verre en fusion est comprise entre 1 000 °C et 1 650 °C.

**19**

Fig. 1

Fig. 2

Fig. 3

Fig. 4

54

51

50

F

53

52

Fig. 7

60

61

62

2

P

I(ω)

G

U(ω)

Fig. 5

Fig. 6

Fig. 8

$Hw_1$ $Hw_2$

Fig. 9

$Vw_1$

Fig. 10

Fig. 11

Fig. 12

Fig. 14

Fig. 13

**Fig. 15**

**Fig. 16**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- AU 473784 B
- DE 102016107577 A1
- DE 102005015651 A1
- WO 2020023218 A1
- JP 2018002539 A
- JP H0920521 A
- JP 2017030987 A
- CN 102001825 A